# EUROPEAN PATENT SPECIFICATION

(11) **EP 1 590 406 B1**
(45) Date of publication and mention of the grant of the patent: **07.06.2006**
(21) Application number: 04705401.0
(22) Date of filing: 27.01.2004
(51) Int. Cl.: C09B 62/01, C09B 67/00, D06P 3/02, D06P 3/58, D06P 3/66

(54) **MIXTURES OF REACTIVE DYES AND THEIR USE**
MISCHUNGEN VON REAKTIONSFARBSTOFFEN UND DEREN VERWENDUNG
MELANGES DE COLORANTS REACTIFS ET LEUR UTILISATION

(30) Priority: 05.02.2003 EP 03405059
(43) Date of publication of application: 02.11.2005
(73) Proprietor: Ciba Specialty Chemicals Holding Inc., 4057 Basel (CH)
(72) Inventor: TZIKAS, Athanassios, CH-4133 Pratteln (CH); ROENTGEN, Georg, 79104 Freiburg (DE); KLIER, Herbert, 79588 Efringen-Kirchen (DE)
(86) International application number: PCT/EP2004/000676
(87) International publication number: WO 2004/069937

(56) References cited:
- EP-A- 1 035 171
- EP-A- 1 134 260
- WO-A-02/053653
- WO-A-02/098986
- WO-A-03/033599

## Description

The present invention relates to mixtures of reactive dyes, especially black-dyeing or navy-blue-dyeing mixtures, that are suitable for dyeing or printing nitrogen-containing or hydroxy-group-containing fibre materials and yield dyeings or prints having good all-round fastness properties.

The practice of dyeing has recently led to higher demands being made on the quality of the dyeings and the profitability of the dyeing process. As a result, there continues to be a need for novel, readily available dye mixtures having good properties, especially in respect of their application.

Black-dyeing or navy-blue-dyeing reactive dye mixtures are known, for example, from EP-A-0 600 322, EP-A-1 134 260, US-A-5 445 654, US-A-5 611 821 and KR 94-02560 B1.

In the case of fibre-reactive dye mixtures, dyes are now required that have, for example, sufficient substantivity and at the same time good ease of washing-off of unfixed dye. They should also exhibit a good colour yield and high reactivity, the objective being especially to obtain dyeings having high degrees of fixing.

The problem underlying the present invention is therefore to find new mixtures of reactive dyes, especially black-dyeing or navy-blue-dyeing mixtures, that are particularly suitable for dyeing and printing fibre materials and that exhibit the qualities described above to a high degree. The dyes should also yield dyeings having good all-round fastness properties, for example fastness to light and to wetting.

The present invention accordingly relates to dye mixtures comprising a reactive dye having at least one structural unit of formula 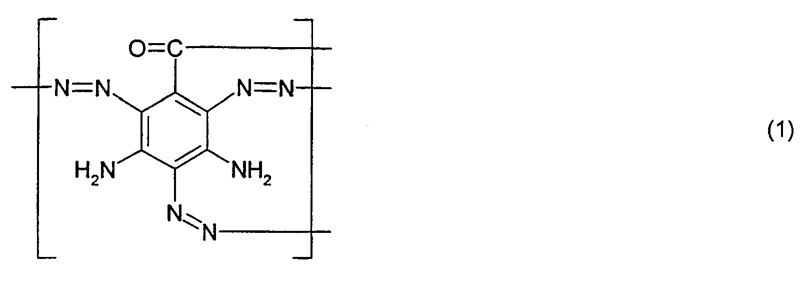 together with a reactive dye of formula 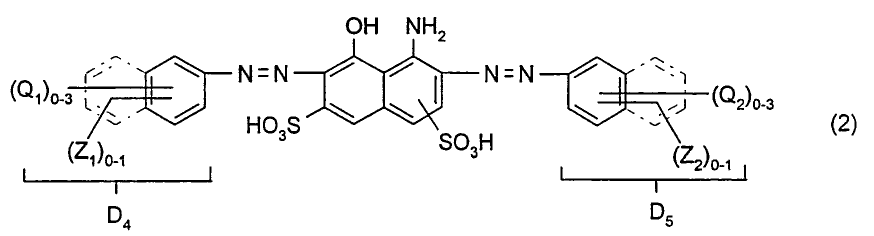 wherein
(Q₁)₀₋₃ and (Q₂)₀₋₃ each independently of the other denote from 0 to 3 identical or different substituents selected from the group halogen, C₁-C₄alkyl, C₁-C₄alkoxy, carboxy and sulfo,
Z₁ and Z₂ are each independently of the other a fibre-reactive radical,
at least one fibre-reactive radical being contained in the dye of formula (1) and
the dye of formula (2) containing at least one fibre-reactive radical Z₁ or Z₂.

Fibre-reactive radicals are to be understood as being those which are capable of reacting with the hydroxy groups of cellulose, with the amino, carboxy, hydroxy and thiol groups in wool and silk or with the amino and possibly carboxy groups of synthetic polyamides to form covalent chemical bonds. The fibre-reactive radicals are generally bonded to the dye radical directly or *via* a bridging member. Suitable fibre-reactive radicals are, for example, those having at least one removable substituent on an aliphatic, aromatic or heterocyclic radical or those wherein the mentioned radicals contain a radical suitable for reaction with the fibre material, for example a vinyl radical.

Such fibre-reactive radicals are known *per se* and a large number of them are described e.g. in Venkataraman "The Chemistry of Synthetic Dyes" volume 6, pages 1-209, Academic Press, New York, London 1972 or in EP-A-625 549 and US-A-5 684 138.

Dyes comprising at least one structural unit of formula (1) are known from US-A-6 160 101 and correspond e.g. to the dye of formula (2), (3) or (4) in the afore-mentioned document.

Preferred as reactive dye having at least one structural unit of formula (1) is a dye of formula 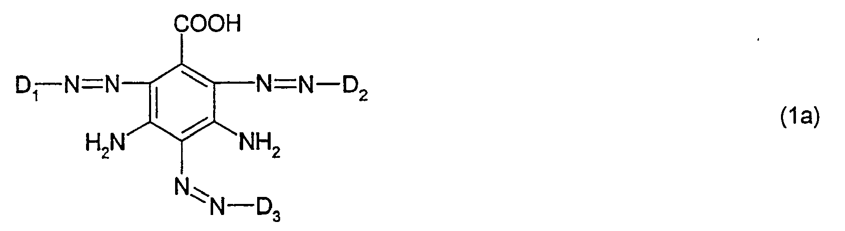 wherein
D₁, D₂ and D₃ are each independently of the others the radical of a diazo component of the benzene or naphthalene series, wherein at least one of the radicals D₁, D₂ and D₃ contains a fibre-reactive radical.

Non-fibre-reactive substituents of the radicals D₁, D₂ and D₃ include the substituents customary for azo dyes. The following may be mentioned by way of example: C₁-C₄alkyl, which is to be understood as being methyl, ethyl, n- or iso-propyl, and n-, iso-, sec- or tert-butyl; C₁-C₄alkoxy, which is to be understood as being methoxy, ethoxy, n- or iso-propoxy and n-, iso-, sec- or tert-butoxy; hydroxy-C₁-C₄alkoxy; phenoxy; C₂-C₆alkanoylamino unsubstituted or substituted in the alkyl moiety by hydroxy or by C₁-C₄alkoxy, e.g. acetylamino, hydroxyacetylamino, methoxyacetylamino or propionylamino; benzoylamino unsubstituted or substituted in the phenyl moiety by hydroxy, sulfo, halogen, C₁-C₄alkyl or by C₁-C₄alkoxy; C₁-C₆alkoxycarbonylamino unsubstituted or substituted in the alkyl moiety by hydroxy, C₁-C₄alkyl or by C₁-C₄alkoxy; phenoxycarbonylamino unsubstituted or substituted in the phenyl moiety by hydroxy, C₁-C₄alkyl or by C₁-C₄alkoxy; amino; N-C₁-C₄alkyl- or N,N-di-C₁-C₄alkyl-amino unsubstituted or substituted in the alkyl moiety or moieties by hydroxy, C₁-C₄alkoxy, carboxy, cyano, halogen, sulfo, sulfato, phenyl or by sulfophenyl, e.g. methylamino, ethylamino, N,N-dimethylamino, N,N-diethylamino, β-cyanoethylamino, β-hydroxyethylamino, N,N-di-β-hydroxyethylamino, β-sulfoethylamino, γ-sulfo-n-propylamino, β-sulfatoethylamino, N-ethyl-N-(3-sulfobenzyl)-amino, N-(β-sulfoethyl)-N-benzylamino; cyclohexylamino; N-phenylamino or N-C₁-C₄alkyl-N-phenylamino each unsubstituted or substituted in the phenyl moiety by nitro, C₁-C₄alkyl, C₁-C₄alkoxy, carboxy, halogen or by sulfo; C₁-C₄₋alkoxycarbonyl, e.g. methoxy- or ethoxy-carbonyl; trifluoromethyl; nitro; cyano; halogen, which is to be understood generally as being, for example, fluorine, bromine or especially chlorine; ureido; hydroxy; carboxy; sulfo; sulfomethyl; carbamoyl; carbamido; sulfamoyl; N-phenylsulfamoyl or N-C₁-C₄alkyl-N-phenylsulfamoyl each unsubstituted or substituted in the phenyl moiety by sulfo or by carboxy; methyl- or ethyl-sulfonyl.

A fibre-reactive radical present in D₁, D₂ and D₃ and the radicals Z₁ and Z₂ correspond, for example, to formula (3a), (3b), (3c), (3d), (3e), (3f) or (3g)

-SO₂-Y (3a),

-NH-CO-(CH₂)ₗ-SO₂-Y (3b),

-CONR₂-(CH₂)ₘ SO₂-Y (3c),

-NH-CO-CH(Hal)-CH₂-Hal (3d),

-NH-CO-C(Hal)=CH₂ (3e),

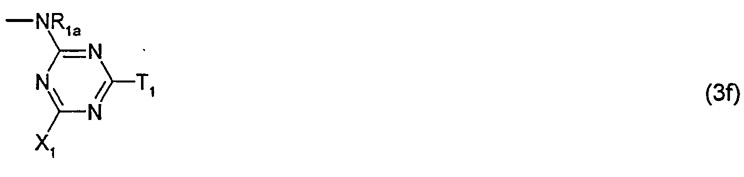

or 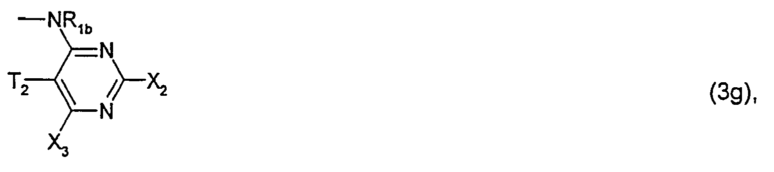 wherein
Hal is chlorine or bromine:
X₁ is halogen, 3-carboxypyridin-1-yl or 3-carbamoylpyridin-1-yl;
T₁ has independently the same definitions as X₁, or is a non-fibre-reactive substituent or a fibre-reactive radical of formula (4a), (4b), (4c), (4d), (4e) or (4f) 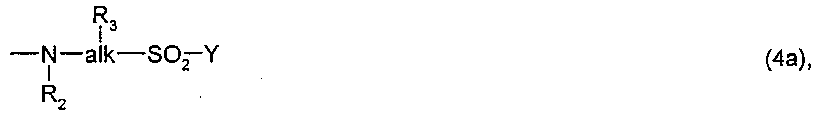 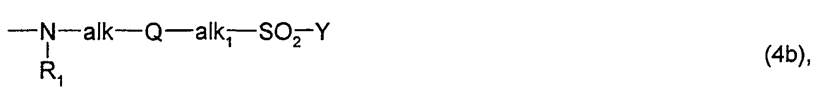 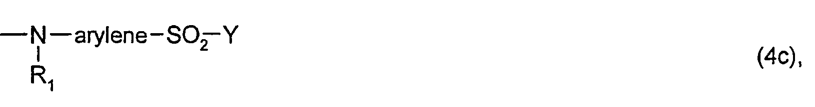 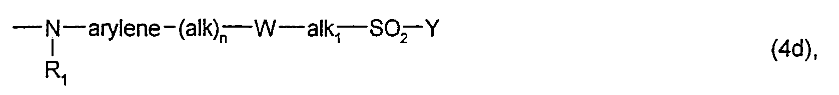 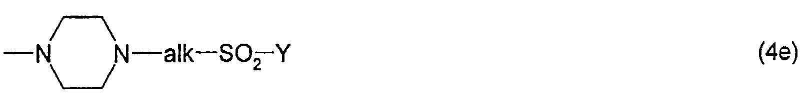 or 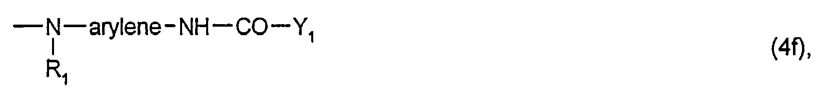 wherein
R₁, R₁ₐ and R_{1b} are each independently of the others hydrogen or C₁-C₄alkyl,
R₂ is hydrogen, C₁-C₄alkyl unsubstituted or substituted by hydroxy, sulfo, sulfato, carboxy or by cyano, or a radical 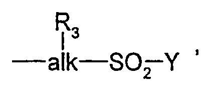 R₃ is hydrogen, hydroxy, sulfo, sulfato, carboxy, cyano, halogen, C₁-C₄alkoxycarbonyl, C₁-C₄alkanoyloxy, carbamoyl or the group -SO₂-Y,
alk and alk₁ are each independently of the other linear or branched C₁-C₆alkylene,
arylene is a phenylene or naphthylene radical unsubstituted or substituted by sulfo, carboxy, C₁-C₄alkyl, C₁-C₄alkoxy or by halogen,
Q is a radical -O- or -NR₁- wherein R₁ is as defined above,
W is a group -SO₂-NR₂-, -CONR₂- or -NR₂CO- wherein R₂ is as defined above,
Y is vinyl or a radical -CH₂-CH₂-U and U is a group removable under alkaline conditions,
Y₁ is a group -CH(Hal)-CH₂-Hal or -C(Hal)=CH₂ and Hal is chlorine or bromine, and
I and m are each independently of the other an integer from 1 to 6 and n is the number 0 or 1, and
X₂ is halogen or C₁-C₄alkylsulfonyl,
X₃ is halogen or C₁-C₄alkyl and
T₂ is hydrogen, cyano or halogen.

As a group U removable under alkaline conditions there come into consideration, for example, -Cl, -Br, -F, -OSO₃H, -SSO₃H, -OCO-CH₃, -OPO₃H₂, -OCO-C₆H₅, -OSO₂-C₁-C₄alkyl and -OSO₂-N(C₁-C₄alkyl)₂. U is preferably a group of formula -Cl, -OSO₃H, -SSO₃H, -OCO-CH₃, -OCO-C₆H₅ or -OPO₃H₂, especially -Cl or -OSO₃H and more especially -OSO₃H.

Examples of suitable radicals Y are accordingly vinyl, β-bromo- or β-chloro-ethyl, β-acetoxyethyl, β-benzoyloxyethyl, β-phosphatoethyl, β-sulfatoethyl and β-thiosulfatoethyl. Y is preferably vinyl, β-chloroethyl or β-sulfatoethyl and especially vinyl or β-sulfatoethyl.

R₁, R₁ₐ and R_{1b} are each independently of the others preferably hydrogen, methyl or ethyl and especially hydrogen.

R₂ is preferably hydrogen or C₁-C₄alkyl, such as methyl, ethyl, propyl, isopropyl, butyl, isobutyl, sec-butyl or tert-butyl and especially hydrogen, methyl or ethyl. More especially R₂ is hydrogen.

R₃ is preferably hydrogen.

I and m are each independently of the other preferably the number 2, 3 or 4 and especially the number 2 or 3.

More especially, I is the number 3 and m is the number 2.

For a non-fibre-reactive substituent T₁ there come into consideration, for example, the following radicals:
hydroxy;
C₁-C₄alkoxy, for example methoxy, ethoxy, n- or iso-propoxy, n-, sec-, iso- or tert-butoxy, especially methoxy or ethoxy; the mentioned radicals are unsubstituted or substituted in the alkyl moiety, for example by C₁-C₄alkoxy, hydroxy, sulfo or by carboxy;
C₁-C₄alkylthio, for example methylthio, ethylthio, n- or iso-propylthio or n-butylthio; the mentioned radicals are unsubstituted or substituted in the alkyl moiety, e.g. by C₁-C₄alkoxy, hydroxy, sulfo or by carboxy; amino;
N-mono- or N,N-di-C₁-C₆alkylamino, preferably N-mono- or N,N-di-C₁-C₄alkylamino; the mentioned radicals are unsubstituted or substituted in the alkyl moiety or moieties, e.g. by C₂-C₄alkanoylamino, C₁-C₄alkoxy, hydroxy, sulfo, sulfato, carboxy, cyano, carbamoyl or by sulfamoyl, and uninterrupted or interrupted in the alkyl moiety or moieties by oxygen; examples that may be mentioned include N-methylamino, N-ethylamino, N-propylamino, N,N-dimethylamino and N,N-diethylamino, N-β-hydroxyethylamino, N,N-di-β-hydroxyethylamino, N-2-(β-hydroxyethoxy)ethylamino, N-2-[2-(β-hydroxyethoxy)ethoxy]ethylamino, N-β-sulfatoethylamino, N-β-sulfoethylamino, N-carboxymethylamino, N-β-carboxy-ethylamino, N-α,β-dicarboxy-ethylamino, N-α,γ-dicarboxypropylamino and N-ethyl-N-β-hydroxyethylamino or N-methyl-N-β-hydroxyethylamino;
C₅-C₇cycloalkylamino, for example cyclohexylamino, which includes both the unsubstituted radicals and the radicals substituted in the cycloalkyl ring, e.g. by C₁-C₄alkyl, especially methyl, or by carboxyl;
phenylamino or N-C₁-C₄alkyl-N-phenylamino, which include both the unsubstituted radicals and the radicals substituted in the phenyl ring, e.g. by C₁-C₄alkyl, C₁-C₄alkoxy, C₂-C₄₋alkanoylamino, carboxy, carbamoyl, sulfo or by halogen, for example 2-, 3- or 4-chloro-phenylamino, 2-, 3- or 4-methylphenylamino, 2-, 3- or 4-methoxyphenylamino, 2-, 3- or 4-sulfophenylamino, disulfophenylamino or 2-, 3- or 4-carboxyphenylamino;
naphthylamino unsubstituted or substituted in the naphthyl ring, e.g. by sulfo, preferably the radicals substituted by from 1 to 3 sulfo groups, for example 1- or 2-naphthylamino, 1-sulfo-2-naphthylamino, 1,5-disulfo-2-naphthylamino or 4,8-disulfo-2-naphthylamino; or benzylamino unsubstituted or substituted in the phenyl moiety, e.g. by C₁-C₄alkyl, C₁-C₄₋alkoxy, carboxy, sulfo or by halogen.

As a non-fibre-reactive radical, T₁ is preferably C₁-C₄alkoxy, C₁-C₄alkylthio, hydroxy, amino, N-mono- or N,N-di-C₁-C₄alkylamino unsubstituted or substituted in the alkyl moiety or moieties by hydroxy, sulfato or by sulfo, morpholino, or phenylamino or N-C₁-C₄alkyl-N-phenylamino (wherein the alkyl is unsubstituted or substituted by hydroxy, sulfo or by sulfato) each unsubstituted or substituted in the phenyl ring by sulfo, carboxy, acetylamino, chlorine, methyl or by methoxy, or naphthylamino unsubstituted or substituted by from 1 to 3 sulfo groups.

Especially preferred non-fibre-reactive radicals T₁ are amino, N-methylamino, N-ethylamino, N-β-hydroxyethylamino, N-methyl-N-β-hydroxyethylamino, N-ethyl-N-β-hydroxyethylamino, N,N-di-β-hydroxyethylamino, morpholino, 2-, 3- or 4-carboxyphenylamino, 2-, 3- or 4-sulfophenylamino and N-C₁-C₄alkyl-N-phenylamino.

X₁ is preferably halogen, for example fluorine, chlorine or bromine and especially chlorine or fluorine.

T₂, X₂ and X₃ as halogen are, for example, fluorine, chlorine or bromine, especially chlorine or fluorine.

X₂ as C₁-C₄alkylsulfonyl is, for example, ethylsulfonyl or methylsulfonyl and especially methylsulfonyl.

X₃ as C₁-C₄alkyl is, for example, methyl, ethyl, n- or iso-propyl, n-, iso- or tert-butyl and especially methyl.

X₂ and X₃ are preferably each independently of the other chlorine or fluorine.

T₂ is preferably cyano or chlorine.

Hal is preferably bromine.

alk and alk₁ are each independently of the other, for example, a methylene, ethylene, 1,3-propylene, 1,4-butylene, 1,5-pentylene or 1,6-hexylene radical or a branched isomer thereof.

alk and alk₁ are preferably each independently of the other a C₁-C₄alkylene radical and especially an ethylene radical or propylene radical. arylene is preferably a 1,3- or 1,4-phenylene radical unsubstituted or substituted, for example, by sulfo, methyl, methoxy or by carboxy, and especially an unsubstituted 1,3- or 1,4-phenylene radical.

Q is preferably -NH- or -O- and especially -O-.

W is preferably a group of formula -CONH- or -NHCO-, especially a group of formula -CONH-.

n is preferably the number 0.

The reactive radicals of formulae (4a) to (4f) are preferably those wherein W is a group of formula -CONH-, R₁ is hydrogen, methyl or methoxy, R₂ and R₃ are each hydrogen, Q is the radical -O- or -NH-, alk and alk₁ are each independently of the other ethylene or propylene, arylene is phenylene unsubstituted or substituted by methyl, methoxy, carboxy or by sulfo,
Y is vinyl or β-sulfatoethyl,
Y₁ is -CHBr-CH₂Br or -CBr=CH₂ and n is the number 0.

In a special embodiment, T₁ in the radical of formula (3f) is a fibre-reactive radical of formula (4a), (4b), (4c), (4d), (4e) or (4f), for which the definitions and preferred meanings given above apply.

A fibre-reactive radical present in D₁, D₂ and D₃ and the radicals Z₁ and Z₂ preferably correspond to a radical of formula (3a), (3b), (3c), (3d), (3e) or (3f) above wherein
Y is vinyl, β-chloroethyl or β-sulfatoethyl,
Hal is bromine,
R₂ and R₁ₐ are hydrogen,
l and m are each independently of the other the number 2 or 3,
X₁ is fluorine or chlorine,
T₁ is C₁-C₄alkoxy, C₁-C₄alkylthio, hydroxy, amino, N-mono- or N,N-di-C₁-C₄alkylamino unsubstituted or substituted in the alkyl moiety or moieties by hydroxy, sulfato or by sulfo, morpholino, or phenylamino or N-C₁-C₄alkyl-N-phenylamino (wherein the alkyl is unsubstituted or substituted by hydroxy, sulfo or by sulfato) each unsubstituted or substituted in the phenyl ring by sulfo, carboxy, acetylamino, chlorine, methyl or by methoxy, or naphthylamino unsubstituted or substituted by from 1 to 3 sulfo groups, or T₁ is a fibre-reactive radical of formula (4a'), (4b'), (4c'), (4d') or (4f')

-NH-(CH₂)₂₋₃-SO₂Y (4a'),

-NH-(CH₂)₂₋₃-O-(CH)₂₋₃-SO₂Y (4b'),

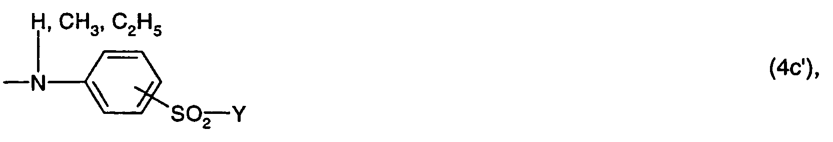

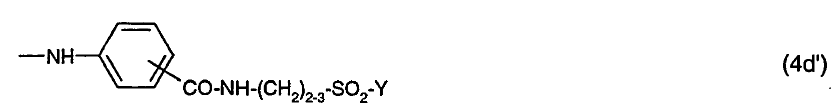

or 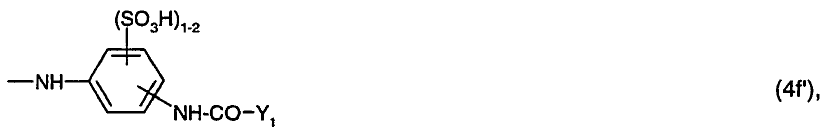 especially (4b'), (4c') or (4d'), wherein
Y is as defined above, and
Y₁ is a group -CH(Br)-CH₂-Br or -C(Br)=CH₂.

The radicals CH₃ and C₂H₅ mentioned in the radical of formula (4c') come into consideration, in addition to hydrogen, as substituents at the nitrogen atom.

In the case of the radicals of formulae (4a') and (4b'), Y is preferably β-chloroethyl. In the case of the radicals of formulae (4c') and (4d'), Y is preferably vinyl or β-sulfatoethyl.

D₁, D₂ and D₃ each independently of the others as radicals of a diazo component of the benzene or naphthalene series are, for example, phenyl or naphthyl unsubstituted or substituted, for example, by C₁-C₄alkyl, C₁-C₄alkoxy, halogen, sulfo, nitro, carboxy or a fibre-reactive radical of formula (3a), (3b), (3c), (3d), (3e), (3f) or (3g), the mentioned fibre-reactive radicals having the definitions and preferred meanings given above.

D₁, D₂ and D₃ each independently of the others as radicals of an unsubstituted or substituted diazo component of the benzene or naphthalene series also include monoazo radicals. Suitable monoazo radicals are, for example, those of formula (11) or (12) from US-A-6 160 101 and preferably correspond to the radicals of formula (12a), (12b), (12c), (12d), (12e), (12f), (12g), (12h), (12i) or (12j) in the afore-mentioned document.

Preferably, the radicals D₁, D₂ and D₃ each independently of the others correspond to a radical of formula (5) or (6) 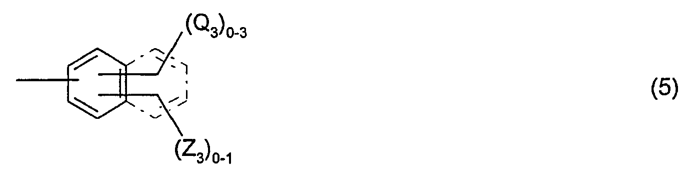 or 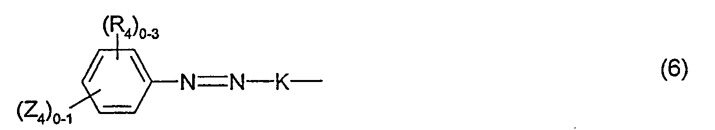 wherein
K is the radical of a coupling component of formula (7a) or (7b) 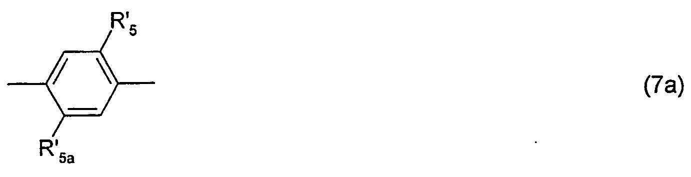 or 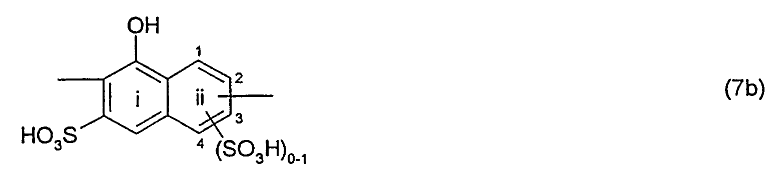 and
Z₃ and Z₄ are each independently of the other a radical of formula (3a), (3b), (3c), (3d), (3e) or (3f) above wherein
R₁ₐ and R₂ are hydrogen,
Hal is bromine,
Y is vinyl, β-chloroethyl or β-sulfatoethyl,
T₁ is C₁-C₄alkoxy, C₁-C₄alkylthio, hydroxy, amino, N-mono- or N,N-di-C₁-C₄alkylamino unsubstituted or substituted in the alkyl moiety or moieties by hydroxy, sulfato or by sulfo, morpholino, or phenylamino or N-C₁-C₄alkyl-N-phenylamino (wherein the alkyl is unsubstituted or substituted by hydroxy, sulfo or by sulfato) each unsubstituted or substituted in the phenyl ring by sulfo, carboxy, acetylamino, chlorine, methyl or by methoxy, or naphthylamino unsubstituted or substituted by from 1 to 3 sulfo groups, or is a fibre-reactive radical of formula (4b'), (4c') or (4d') above and Y is as defined above,
X₁ is chlorine or fluorine, preferably chlorine,
m and l are each independently of the other the number 2 or 3,
(R₄)₀₋₃ and (Q₃)₀₋₃ each independently of the other denote from 0 to 3 identical or different substituents selected from the group halogen, C₁-C₄alkyl, C₁-C₄alkoxy, carboxy and sulfo,
R'₅ is hydrogen, sulfo or C₁-C₄alkoxy unsubstituted or substituted in the alkyl moiety by hydroxy or by sulfato, and
R'₅ₐ is hydrogen, C₁-C₄alkyl, C₁-C₄alkoxy, C₂-C₄alkanoylamino, ureido or a radical of formula (3f) wherein the radicals R₁ₐ, T₁ and X₁ are as defined above.

As C₁-C₄alkyl for R₄, R'₅ₐ, Q₁, Q₂ and Q₃, each independently of the others, there come into consideration e.g. methyl, ethyl, n-propyl, isopropyl, n-butyl, sec-butyl, tert-butyl and isobutyl, preferably methyl or ethyl and especially methyl.

As C₁-C₄alkoxy for R₄, R'₅, R'₅ₐ, Q₁, Q₂ and Q₃, each independently of the others, there come into consideration e.g. methoxy, ethoxy, n-propoxy, isopropoxy, n-butoxy and isobutoxy, preferably methoxy or ethoxy and especially methoxy. R'₅ is unsubstituted or may be substituted in the alkyl moiety by hydroxy or by sulfato.

As halogen for R₄ and Q₁, Q₂ and Q₃, each independently of the others, there come into consideration e.g. fluorine, chlorine and bromine, preferably chlorine or bromine and especially chlorine.

As C₂-C₄alkanoylamino for R'₅ₐ there come into consideration e.g. acetylamino and propionylamino, especially acetylamino.

As a radical of formula (3f) for R'₅ₐ there comes into consideration preferably a radical wherein
R₁ₐ is hydrogen,
T₁ is amino, N-mono- or N, N-di-C₁-C₄alkylamino unsubstituted or substituted in the alkyl moiety or moieties by hydroxy, sulfato or by sulfo, morpholino, or phenylamino or N-C₁-C₄alkyl-N-phenylamino (wherein the alkyl is unsubstituted or substituted by hydroxy, sulfo or by sulfato) each unsubstituted or substituted in the phenyl ring by sulfo, carboxy, acetylamino, chlorine, methyl or by methoxy, or naphthylamino unsubstituted or substituted by from 1 to 3 sulfo groups, and
X₁ is fluorine or chlorine.

In the radical of the coupling component of formula (7b), the sulfo group in ring ii is preferably bonded in the 3- or 4-position. When the ring ii contains a sulfo group, the radical of formula (7b) is preferably bonded in the 1-, 2- or 3-position of the ring ii. When there is no sulfo group in the ring ii, the radical of formula (7b) is bonded preferably in the 2- or 3-position of the ring ii.

Especially preferably, the radicals D₁, D₂ and D₃ each independently of the others correspond to a radical of formula (5a), (5b), (5c), (5d), (5e) or (6a) 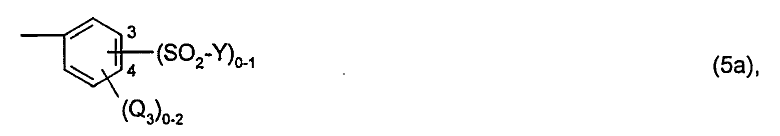 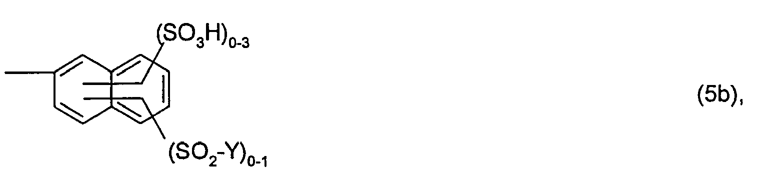 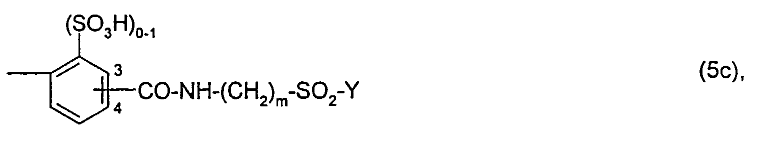 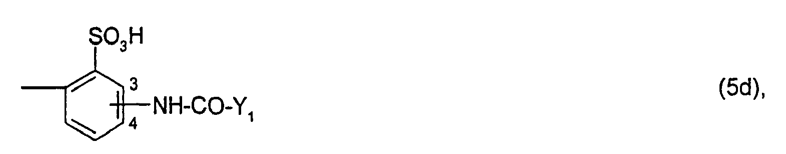 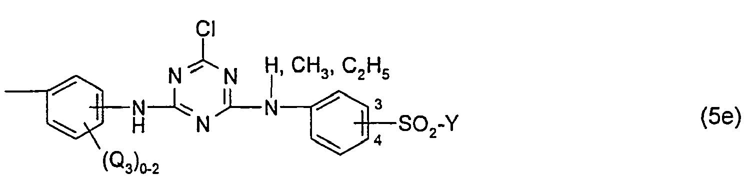 or 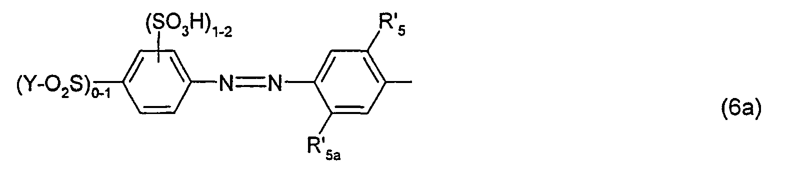 wherein
R'₅ is hydrogen, sulfo or ethoxy unsubstituted or substituted in the alkyl moiety by hydroxy or by sulfato,
R'₅ₐ is hydrogen, methyl, ethyl, methoxy, ethoxy, acetylamino, propionylamino or ureido,
(Q₃)₀₋₂ denotes from 0 to 2 identical or different substituents selected from the group
C₁-C₄alkyl, C₁-C₄alkoxy and sulfo, especially methoxy, methyl and sulfo,
Y₁ is a group -CH(Br)-CH₂-Br or -C(Br)=CH₂,
Y is vinyl, β-chloroethyl or β-sulfatoethyl, especially vinyl or β-sulfatoethyl, and
m is the number 2 or 3, especially 2.

The numbers in the radicals of formulae (5a), (5c), (5d) and (5e) indicate the possible bonding positions of the fibre-reactive radical.

Preferably, D₁, D₂ and D₃ are each independently of the others a radical of formula (5a), (5b) or (6a), especially of formula (5a).

The radicals D₁, D₂ and D₃ in the dye of formula (1 a) are identical or non-identical.

Preferably at least two of the radicals D₁, D₂ and D₃ in the dye of formula (1 a) contain a fibre-reactive radical.

Reactive dyes of formula (2) are likewise known and are described, for example, in DE-A-960 534, EP-A-0 063 276, EP-A-0 122 600, DE-A-31 13 989, US-A-2 657 205, US-A-4 257 770, US-A-4 754 023 and US-A-5 989 298.

The reactive dye of formula (2) preferably contains two fibre-reactive radicals Z₁ and Z₂.

D₄ and D₅ in the dye of formula (2) are preferably phenyl radicals.

In an interesting embodiment of the present invention, the radicals Z₁ and Z₂ in the reactive dye of formula (2) are different. For example, one of the radicals Z₁ and Z₂ is a fibre-reactive radical of formula (3a) and the other of the radicals Z₁ and Z₂ is a fibre-reactive radical of formula (3f), the mentioned radicals having the definitions and preferred meanings given above.

Preferred as reactive dye of formula (2) is a dye of formula 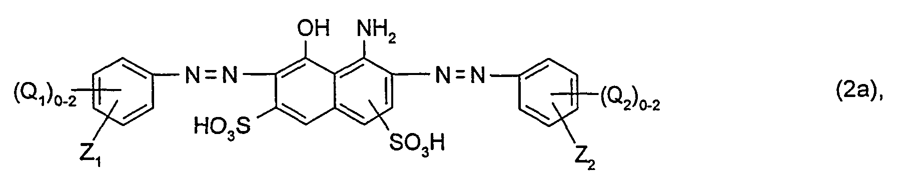 wherein
(Q₁)₀₋₂ and (Q₂)₀₋₂ each independently of the other denote from 0 to 2 identical or different substituents selected from the group C₁-C₄alkyl, C₁-C₄alkoxy and sulfo, especially methyl, methoxy and sulfo, and
Z₁ and Z₂ have the definitions and preferred meanings mentioned above.

Preferably, the radicals Z₁ and Z₂ are each independently of the other a radical of formula (3a), (3b), (3c), (3d), (3e) or (3f) above wherein
Y is vinyl, β-chloroethyl or β-sulfatoethyl,
Hal is bromine,
R₂ and R₁ₐ are hydrogen,
l and m are each independently of the other the number 2 or 3,
X₁ is fluorine or chlorine,
T₁ is C₁-C₄alkoxy, C₁-C₄alkylthio, hydroxy,amino, N-mono- or N,N-di-C₁-C₄alkylamino unsubstituted or substituted in the alkyl moiety or moieties by hydroxy, sulfato or by sulfo, morpholino, phenylamino or N-C₁-C₄alkyl-N-phenylamino (wherein the alkyl is unsubstituted or substituted by hydroxy, sulfo or by sulfato) each unsubstituted or substituted in the phenyl ring by sulfo, carboxy, acetylamino, chlorine, methyl or by methoxy, or naphthylamino unsubstituted or substituted by from 1 to 3 sulfo groups, or T₁ is a fibre-reactive radical of formula (4a'), (4b'), (4c'), (4d') or (4f) above wherein
Y is as defined above, and
Y₁ is a group -CH(Br)-CH₂-Br or -C(Br)=CH₂.

Especially preferably, the radicals Z₁ and Z₂ are each independently of the other a radical of formula (3a), (3b), (3c) or (3f) above, especially (3a), (3c) or (3f), wherein
Y is vinyl, β-chloroethyl or β-sulfatoethyl,
R₂ and R₁ₐ are hydrogen,
l and m are each independently of the other the number 2 or 3,
X₁ is fluorine or chlorine, especially chlorine, and
T₁ is a fibre-reactive radical of formula (4b'), (4c') or (4d') above,
especially (4b') or (4c') and more especially (4b'), wherein
Y is as defined above.

Preference is given to dye mixtures that comprise a dye of formula (1 a) together with a dye of formula (2a), wherein
D₁, D₂ and D₃ are each independently of the others a radical of formula (5a), (5b) or (6a) above, especially (5a), wherein
R'₅ is hydrogen, sulfo or ethoxy unsubstituted or substituted in the alkyl moiety by hydroxy or by sulfato,
R'₅ₐ is hydrogen, methyl, ethyl, methoxy, ethoxy, acetylamino, propionylamino or ureido,
(Q₁)₀₋₂, (Q₂)₀₋₂ and (Q₃)₀₋₂ each independently of the others denote from 0 to 2 identical or different substituents selected from the group C₁-C₄alkyl, C₁-C₄alkoxy and sulfo, especially methyl, methoxy and sulfo,
Y is vinyl or β-sulfatoethyl, and
Z₁ and Z₂ are each independently of the other a radical of formula (3a), (3b), (3c), (3d), (3e) or (3f) above, especially (3a), (3c) or (3f), wherein
Y is vinyl, β-chloroethyl or β-sulfatoethyl,
R₁ₐ and R₂ are hydrogen,
l and m are each independently of the other the number 2 or 3,
X₁ is fluorine or chlorine, especially chlorine, and
T₁ is a fibre-reactive radical of formula (4b'), (4c') or (4d') above, preferably (4b') or (4c') and especially (4b'), wherein Y is as defined above.

The reactive dyes of formulae (1) and (2) in the dye mixtures according to the invention contain sulfo groups which are each either in the form of the free sulfonic acid or preferably in the form of a salt thereof, e.g. in the form of a sodium, lithium, potassium or ammonium salt or a salt of an organic amine, e.g. in triethanolammonium salt form. The reactive dyes of formulae (1) and (2) and accordingly also the dye mixtures may comprise further additives, e.g. sodium chloride or dextrin.

The dyes of formulae (1) and (2) are present in the dye mixture e.g. in a ratio by weight of from 1:99 to 99:1, preferably from 5:95 to 95:5 and especially from 10:90 to 90:10.

An interesting embodiment of the present invention relates to dye mixtures comprising the dyes of formulae (1) and (2) together with a dye of formula 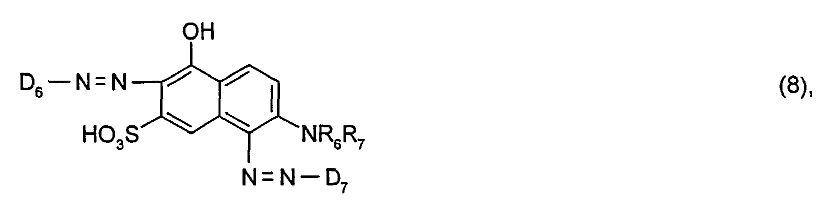 wherein
R₆ and R₇ are each independently of the other hydrogen or C₁-C₄alkyl, and
D₆ and D₇ are each independently of the other the radical of a diazo component of the benzene or naphthalene series.

The radicals D₆ and D₇ each independently of the other have, for example, the definitions and preferred meanings indicated above for D₁, D₂ and D₃. Preferably, the radicals D₆ and D₇ are each independently of the other a radical of formula (5) above, wherein the variables have the definitions and preferred meanings indicated above. Especially preferably, each of the radicals D₆ and D₇ as a radical of formula (5) above contains a fibre-reactive radical Z₃.

The radicals R₆ and R₇ each independently of the other have, for example, the definitions and preferred meanings indicated above for R₁, R₁ₐ and R_{1b}.

The dyes of formula (8) are known and are described, for example, in WO-A-00/06652.

As a dye of formula (8) it is possible to use, for example, the dye or dyes of Example 26, 49, 63 or 88 of WO-A-00/06652.

The dye mixtures according to the invention can be prepared, for example, by mixing the individual dyes together. That mixing process is carried out, for example, in suitable mills, e.g. ball mills or pin mills, and also in kneaders or mixers.

The dye mixtures according to the invention are suitable for dyeing and printing an extremely wide variety of materials, especially hydroxyl-group-containing or nitrogen-containing fibre materials. Examples are paper, silk, leather, wool, polyamide fibres and polyurethanes and also especially cellulosic fibre materials of all kinds. Such fibre materials are, for example, the natural cellulosic fibres, such as cotton, linen and hemp, and also cellulose and regenerated cellulose. The dye mixtures according to the invention are also suitable for dyeing or printing hydroxyl-group-containing fibres present in blend fabrics, e.g. mixtures of cotton with polyester fibres or polyamide fibres.

The present invention accordingly relates also to the use of the dye mixtures according to the invention in the dyeing or printing of hydroxyl-group-containing or nitrogen-containing, especially cellulosic, fibre materials.

The dye mixtures according to the invention can be applied to the fibre material and fixed to the fibre in a variety of ways, especially in the form of aqueous dye solutions and dye print pastes. They are suitable both for the exhaust process and for dyeing in accordance with the pad-dyeing process; they can be used at low dyeing temperatures and require only short steaming times in the pad-steam process. The degrees of fixing are high and unfixed dye can be washed off readily, the difference between the degree of exhaust and the degree of fixing being remarkably small, that is to say the soaping loss is very small. The dye mixtures according to the invention are also suitable for printing, especially on cotton, and also for printing nitrogen-containing fibres, for example wool or silk or blend fabrics that contain wool.

The dyeings and prints produced using the dye mixtures according to the invention have a high tinctorial strength and a high fibre-dye binding stability in both the acidic and the alkaline range, as well as good fastness to light and very good wet-fastness properties, such as fastness to washing, to water, to seawater, to cross-dyeing and to perspiration. The dyeings obtained exhibit fibre-levelness and surface-levelness.

The dye mixtures according to the invention are also suitable as colorants for use in recording systems. Such recording systems are, for example, commercially available inkjet printers for paper or textile printing, or writing instruments, such as fountain pens and ballpoint pens and especially inkjet printers. For that purpose the dye mixture according to the invention is first brought into a form suitable for use in recording systems. A suitable form is, for example, an aqueous ink that comprises the dye mixture according to the invention as colorant. The inks can be prepared in customary manner by mixing together the individual constituents in the desired amount of water.

Substrates that come into consideration include the above-mentioned hydroxyl-group-containing or nitrogen-containing fibre materials, especially cellulosic fibre materials.

The dyes used in the aqueous inks should preferably have a low salt content, that is to say they should have a total content of salts of less than 0.5 % by weight, based on the weight of the dyes. Dyes that have relatively high salt contents as a result of their preparation and/or as a result of the subsequent addition of diluents can be desalted, for example, by membrane separation procedures, such as ultrafiltration, reverse osmosis or dialysis.

The inks preferably have a total content of dyes of from 1 to 35 % by weight, especially from 1 to 30 % by weight and preferably from 1 to 20 % by weight, based on the total weight of the ink. As a lower limit, a limit of 1.5 % by weight, preferably 2 % by weight and especially 3 % by weight, is preferred.

The inks may comprise water-miscible organic solvents, for example C₁-C₄alcohols, such as methanol, ethanol, n-propanol, isopropanol, n-butanol, sec-butanol, tert-butanol and isobutanol; amides, e.g. dimethylformamide and dimethylacetamide; ketones or ketone alcohols, e.g. acetone and diacetone alcohol; ethers, e.g. tetrahydrofuran and dioxane; nitrogen-containing heterocyclic compounds, e.g. N-methyl-2-pyrrolidone and 1,3-dimethyl-2-imidazolidone; polyalkylene glycols, e.g. polyethylene glycol and polypropylene glycol; C₂-C₆₋alkylene glycols and thioglycols, e.g. ethylene glycol, propylene glycol, butylene glycol, triethylene glycol, thiodiglycol, hexylene glycol and diethylene glycol; further polyols, e.g. glycerol and 1,2,6-hexanetriol; and C₁-C₄alkyl ethers of polyhydric alcohols, e.g. 2-methoxyethanol, 2-(2-methoxyethoxy)ethanol, 2-(2-ethoxyethoxy)ethanol, 2-[2-(2-methoxyethoxy)-ethoxy]-ethanol and 2-[2-(2-ethoxyethoxy)ethoxy]ethanol; preferably N-methyl-2-pyrrolidone, diethylene glycol, glycerol or especially 1,2-propylene glycol, usually in an amount of from 2 to 30 % by weight, especially from 5 to 30 % by weight and preferably from 10 to 25 % by weight, based on the total weight of the ink.

The inks may also comprise solubilisers, e.g. ε-caprolactam.

The inks may comprise thickeners of natural or synthetic origin *inter alia* for the purpose of adjusting the viscosity.

Examples of thickeners that may be mentioned include commercially available alginate thickeners, starch ethers or locust bean flour ethers, especially sodium alginate on its own or in admixture with modified cellulose, e.g. methylcellulose, ethylcellulose, carboxymethylcellulose, hydroxyethylcellulose, methylhydroxyethylcellulose, hydroxypropyl cellulose or hydroxypropyl methylcellulose, especially with preferably from 20 to 25 % by weight carboxymethylcellulose. Synthetic thickeners that may be mentioned are, for example, those based on poly(meth)acrylic acids or poly(meth)acrylamides and also polyalkylene glycols having a molecular weight of e.g. from 2000 to 20 000, for example polyethylene glycol or polypropylene glycol or the mixed polyalkylene glycols of ethylene oxide and propylene oxide.

The inks comprise such thickeners, for example, in an amount of from 0.01 to 2 % by weight, especially from 0.01 to 1 % by weight and preferably from 0.01 to 0.5 % by weight, based on the total weight of the ink.

The inks may also comprise buffer substances, e.g. borax, borates, phosphates, polyphosphates or citrates. Examples that may be mentioned include borax, sodium borate, sodium tetraborate, sodium dihydrogen phosphate, disodium hydrogen phosphate, sodium tripolyphosphate, sodium pentapolyphosphate and sodium citrate. They are used especially in amounts of from 0.1 to 3 % by weight, preferably from 0.1 to 1 % by weight, based on the total weight of the ink, in order to establish a pH value of, for example, from 4 to 9, especially from 5 to 8.5.

As further additives, the inks may comprise surfactants or humectants.

Suitable surfactants include commercially available anionic or non-ionic surfactants. As humectants in the inks according to the invention there come into consideration, for example, urea or a mixture of sodium lactate (advantageously in the form of a 50 % to 60 % aqueous solution) and glycerol and/or propylene glycol in amounts of preferably from 0.1 to 30 % by weight, especially from 2 to 30 % by weight.

Preference is given to inks having a viscosity of from 1 to 40 mPa.s, especially from 1 to 20 mPa·s and preferably from 1 to 10 mPa·s.

The inks may also comprise customary additives, such as antifoam agents or especially preservatives that inhibit the growth of fungi and/or bacteria. Such additives are usually used in amounts of from 0.01 to 1 % by weight, based on the total weight of the ink.

Preservatives that come into consideration include formaldehyde-yielding agents, e.g. paraformaldehyde and trioxane, especially aqueous, approximately 30 to 40 % by weight formaldehyde solutions, imidazole compounds, e.g. 2-(4-thiazolyl)benzimidazole, thiazole compounds, e.g. 1,2-benzisothiazolin-3-one or 2-n-octyl-isothiazolin-3-one, iodine compounds, nitriles, phenols, haloalkylthio compounds or pyridine derivatives, especially 1,2-benzisothiazolin-3-one or 2-n-octyl-isothiazolin-3-one. A suitable preservative is e.g. a 20 % by weight solution of 1,2-benzisothiazolin-3-one in dipropylene glycol (Proxel® GXL).

The inks may also comprise further additives, such as fluorinated polymers or telomers, e.g. polyethoxyperfluoroalcohols (Forafac® or Zonyl® products) in an amount of e.g. from 0.01 to 1 % by weight, based on the total weight of the ink.

In inkjet printing, individual droplets of the ink are sprayed onto a substrate in a controlled manner from a nozzle. For this purpose, predominantly the continuous inkjet method and the drop-on-demand method are used. In the continuous inkjet method, the droplets are produced continuously and any droplets not required for the printing are conveyed to a collecting vessel and recycled, whereas in the drop-on-demand method droplets are produced and printed as required; that is to say droplets are produced only when required for the printing. The production of the droplets can be effected, for example, by means of a piezo-inkjet head or by means of thermal energy (bubble jet). Printing by means of a piezo-inkjet head and printing in accordance with the continuous inkjet method are preferred.

The present invention accordingly relates also to aqueous inks comprising the dye mixtures according to the invention and to the use of such inks in an inkjet printing method for the printing of various substrates, especially textile fibre materials, the definitions and preferred meanings mentioned above applying to the dye mixtures, the inks and the substrates.

The following Examples serve to illustrate the invention. Unless otherwise indicated, the temperatures are given in degrees Celsius, parts are parts by weight and percentages relate to % by weight. Parts by weight relate to parts by volume in a ratio of kilograms to litres.

Example 1: 100 parts of a cotton fabric are introduced at a temperature of 60°C into a dyebath containing 0.9 part of the dye of formula 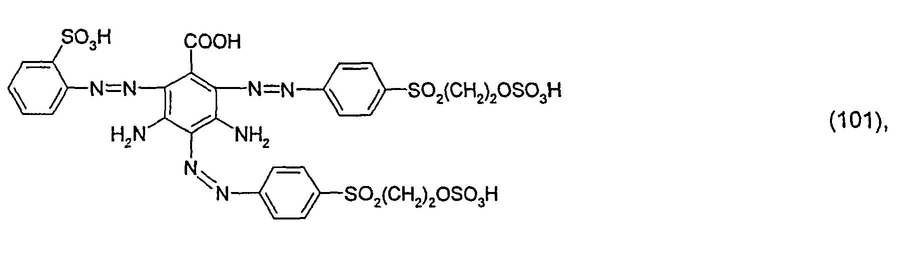 5.1 parts of the dye of formula 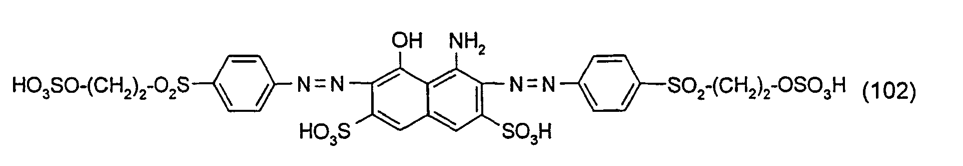 and 60 parts of sodium chloride in 1000 parts of water. After 45 minutes at 60°C, 20 parts of calcined soda are added. The temperature of the dyebath is maintained at 60°C for a further 45 minutes. The dyed fabric is then rinsed and dried in customary manner. A black dyeing having good fastness properties is obtained.

Examples 2 to 69: Using the procedure indicated in Example 1, but using instead of 0.9 part of the dye of formula (101) the same amount of the dye of the general formula 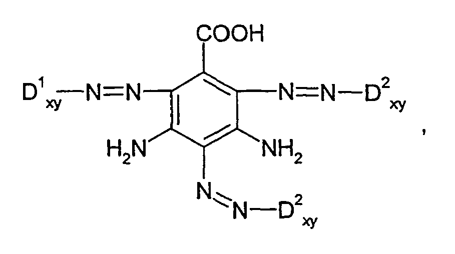 wherein D¹_{xy} and D²_{xy} each correspond to the radicals indicated in Table 1 and those radicals are as defined in Table 2, there are likewise obtained black dyeings having good fastness properties.

**Table 1:**

| Example | D¹_{xy} | D²_{xy} | Example | D¹_{xy} | D²_{xy} |
|---|---|---|---|---|---|
| 2 | D₁₀ | D₁₂ | 36 | D₁₀ | D₂₀ |
| 3 | D₁₃ | D₁₁ | 37 | D₁₀ | D₂₁ |
| 4 | D₁₃ | D₁₂ | 38 | D₁₀ | D₂₂ |
| 5 | D₁₀ | D₁₃ | 39 | D₃₄ₐ | D₁₃ |
| 6 | D₁₀ | D₂₄ | 40 | D_{34b} | D₁₃ |
| 7 | D₁₀ | D₂₇ | 41 | D_{34c} | D₁₃ |
| 8 | D₁₀ | D₂₈ | 42 | D_{34d} | D₁₃ |
| 9 | D₁₀ | D₂₉ | 43 | D₃₄ₑ | D₁₃ |
| 10 | D₁₀ | D₃₀ | 44 | D_{34f} | D₁₃ |
| 11 | D₁₀ | D₃₁ | 45 | D_{34g} | D₁₃ |
| 12 | D₁₀ | D₃₂ | 46 | D₃₄ₕ | D₁₃ |
| 13 | D₁₀ | D₃₃ | 47 | D₃₄ᵢ | D₁₃ |
| 14 | D₁₀ | D₁₄ | 48 | D₃₄ⱼ | D₁₃ |
| 15 | D₁₀ | D₁₅ | 49 | D₃₄ₖ | D₁₃ |
| 16 | D₁₀ | D₁₆ | 50 | D₃₄ₗ | D₁₃ |
| 17 | D₁₀ | D₂₃ | 51 | D₃₄ₘ | D₁₃ |
| 18 | D₂₅ | D₁₁ | 52 | D₃₄ₙ | D₁₃ |
| 19 | D₂₆ | D₁₂ | 53 | D₃₄ₒ | D₁₃ |
| 20 | D₂₅ | D₁₃ | 54 | D₃₄ₚ | D₁₃ |
| 21 | D₂₅ | D₂₄ | 55 | D_{34q} | D₁₃ |
| 22 | D₂₅ | D₂₇ | 56 | D₃₄ᵣ | D₁₃ |
| 23 | D₂₅ | D₂₈ | 57 | D₃₅ | D₁₃ |
| 24 | D₂₅ | D₂₉ | 58 | D₃₆ | D₁₃ |
| 25 | D₂₅ | D₃₀ | 59 | D₃₇ | D₁₃ |
| 26 | D₂₅ | D₃₁ | 60 | D₃₅ | D₁₁ |
| 27 | D₂₅ | D₁₄ | 61 | D₃₆ | D₁₁ |
| 28 | D₂₅ | D₁₅ | 62 | D₃₇ | D₁₁ |
| 29 | D₂₅ | D₁₆ | 63 | D₃₄ₐ | D₁₁ |
| 30 | D₂₅ | D₂₃ | 64 | D₃₄ₑ | D₁₁ |
| 31 | D₂₆ | D₁₁ | 65 | D_{34f} | D₁₁ |
| 32 | D₃₈ | D₁₁ | 66 | D_{34g} | D₁₁ |
| 33 | D₁₀ | D₁₇ | 67 | D₃₄ₕ | D₁₁ |
| 34 | D₁₀ | D₁₈ | 68 | D₃₉ | D₁₃ |
| 35 | D₁₀ | D₁₉ | 69 | D₃₉ | D₁₁ |

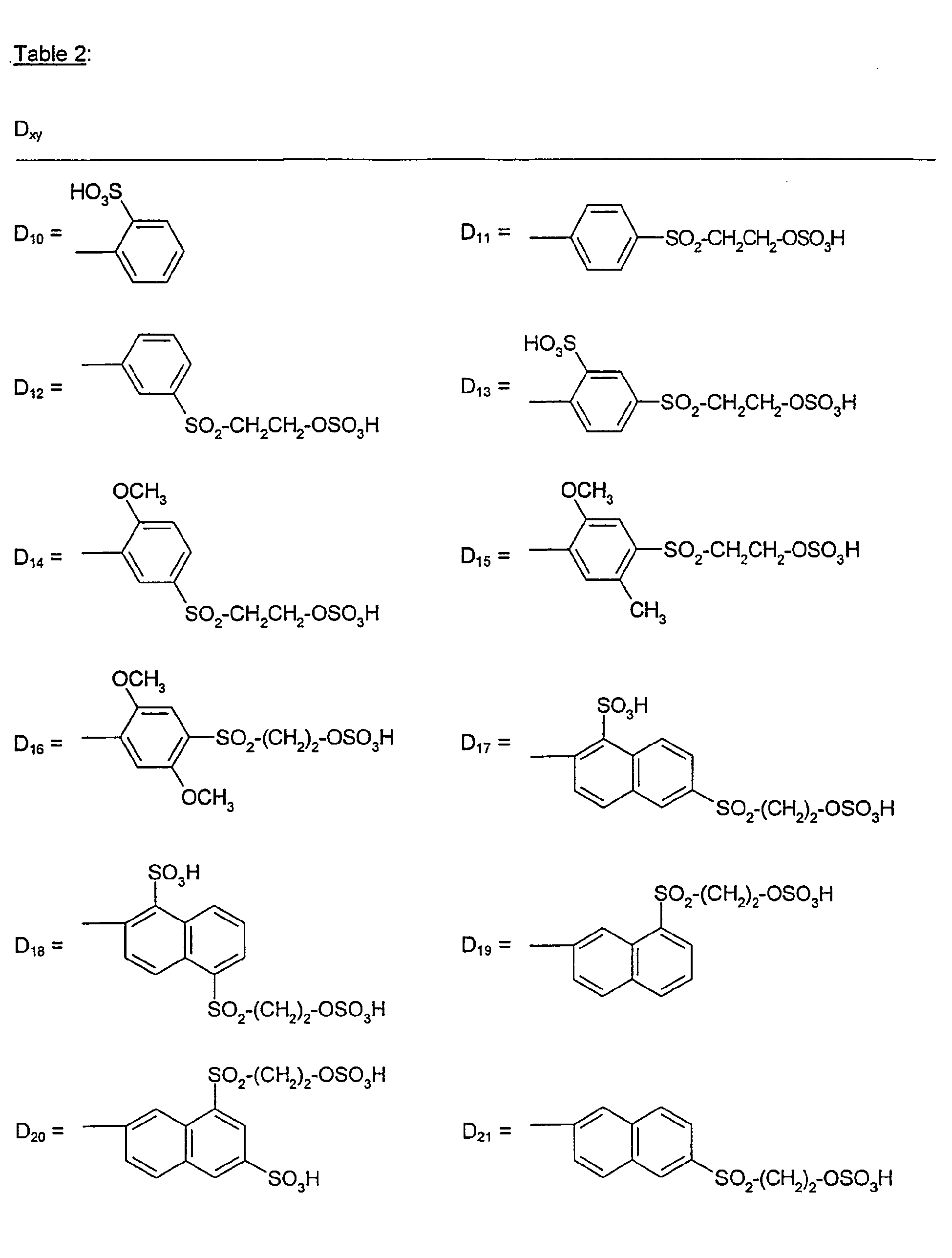

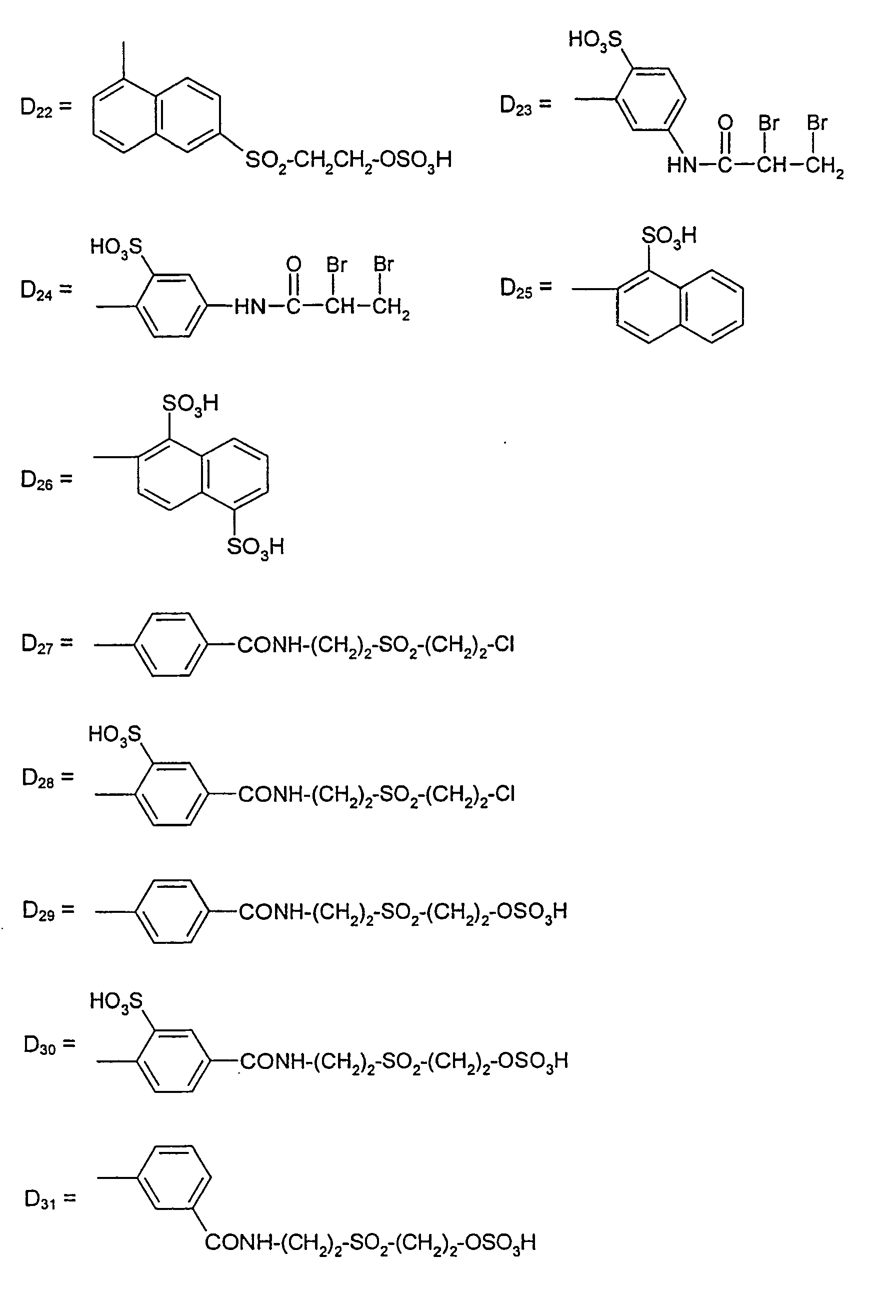

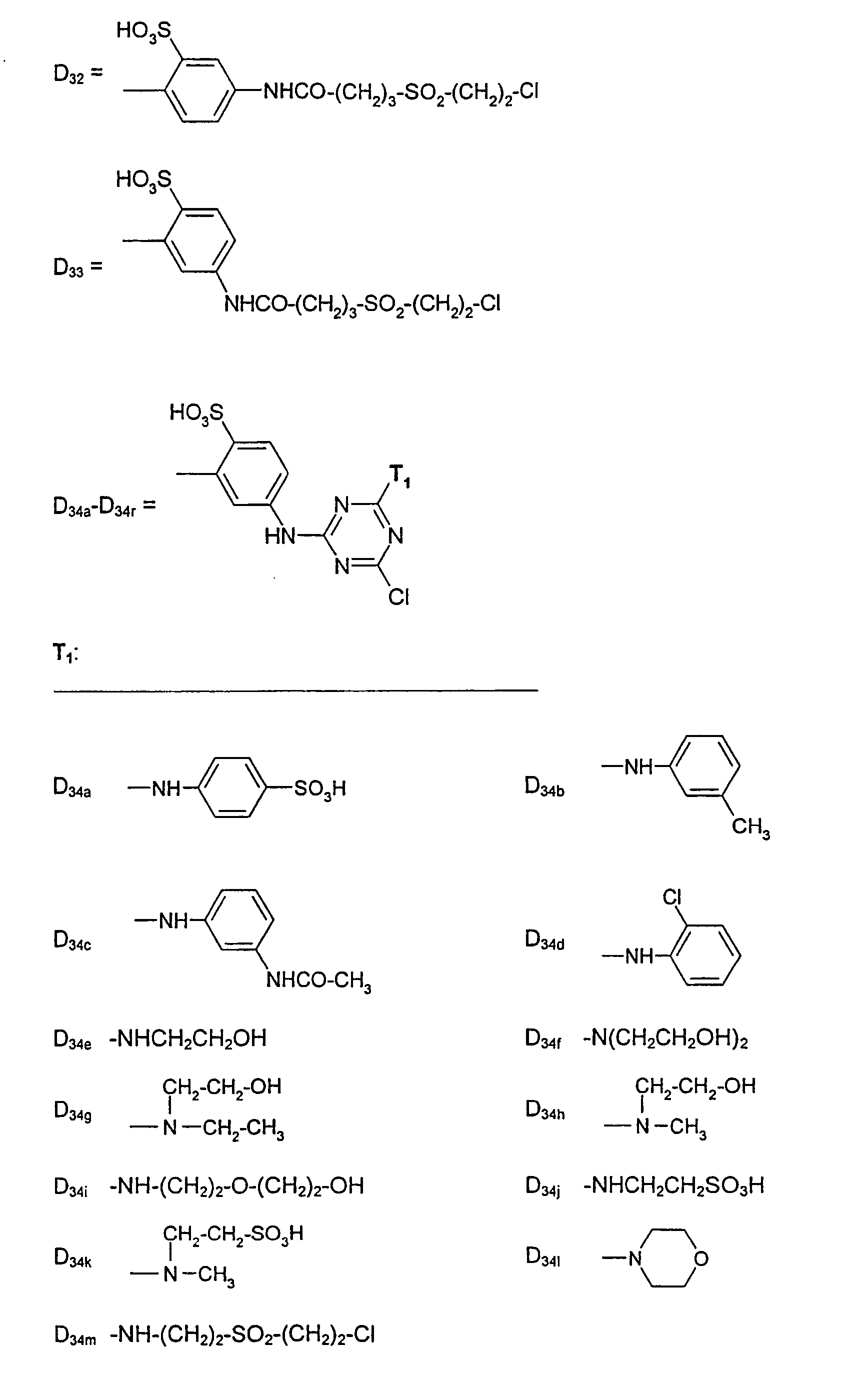

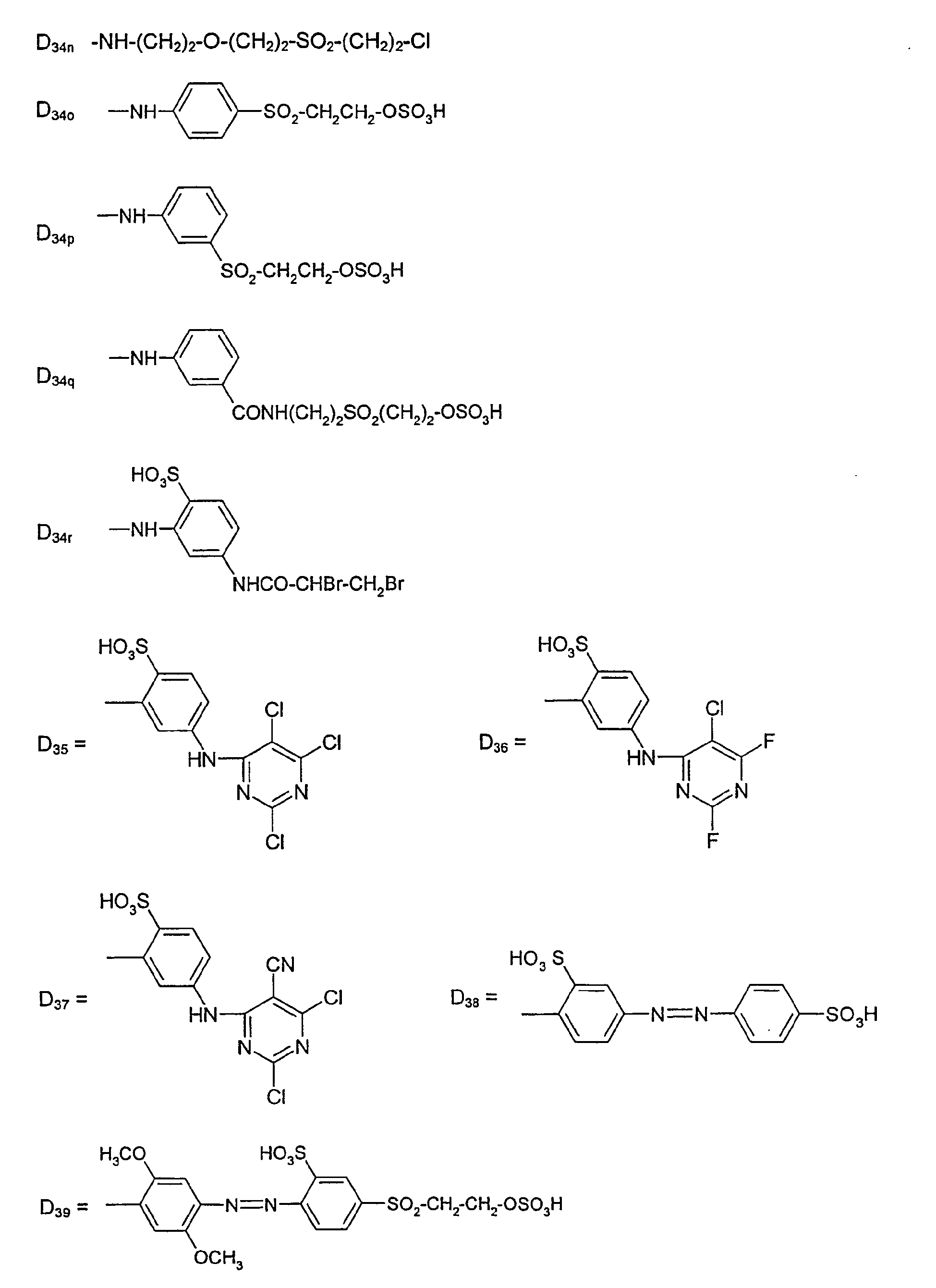

Examples 70 to 77: Using the procedure indicated in Example 1, but using instead of 5.1 parts of the dye of formula (102) the same amount of a dye of the formulae indicated below, there are likewise obtained black dyeings having good fastness properties.

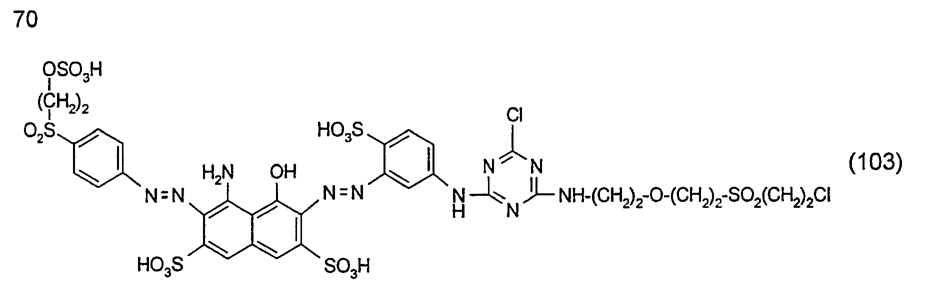

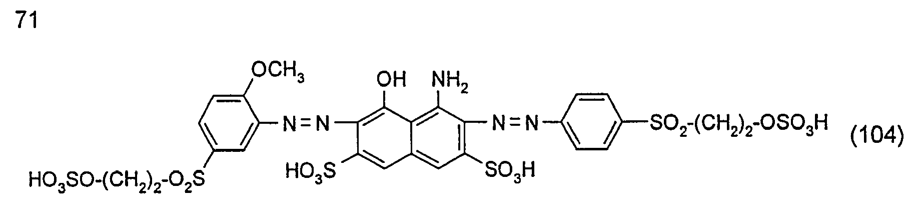

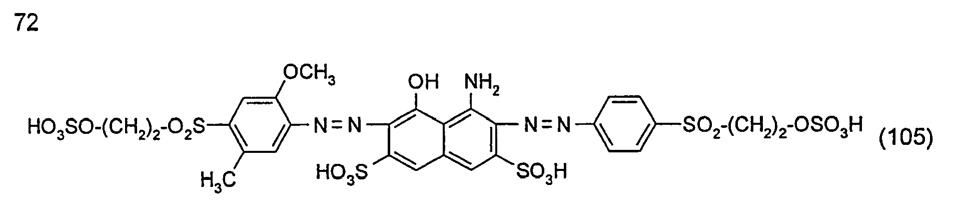

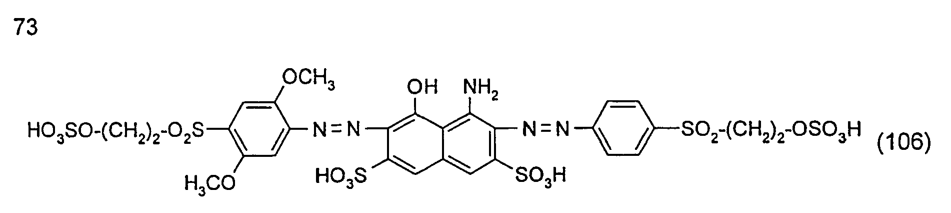

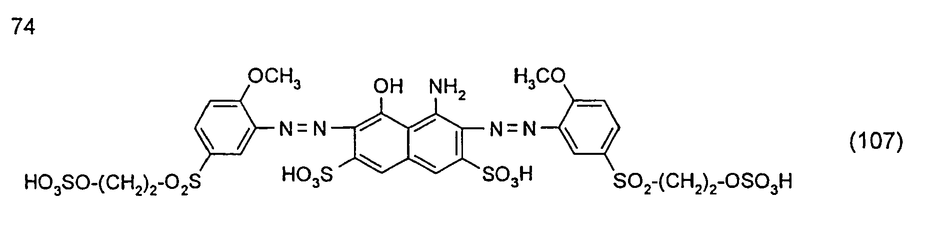

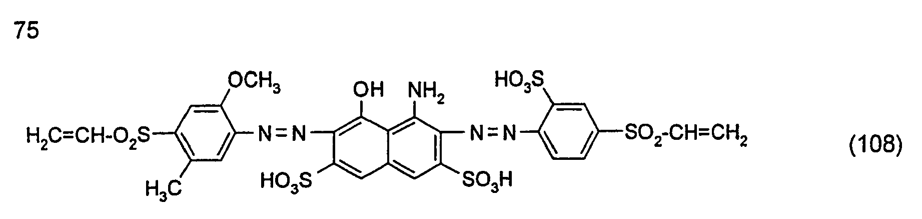

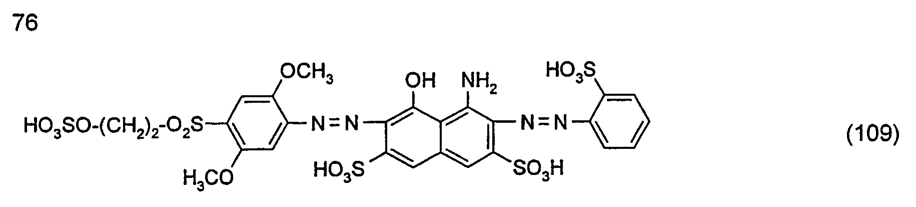

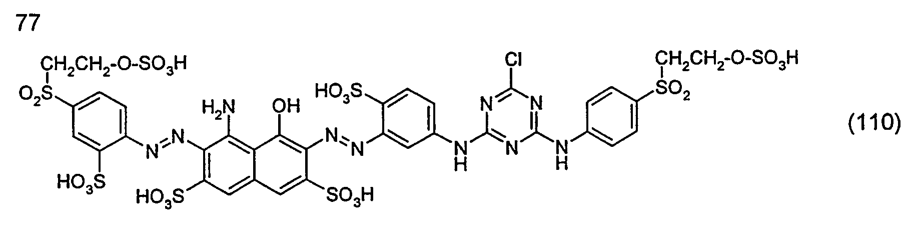

Example 78: 100 parts of a cotton fabric are introduced at a temperature of 30°C into a dyebath containing 1.2 parts of the dye of formula (102), 1.2 parts of the dye of formula (101),3.6 parts of the dye of formula 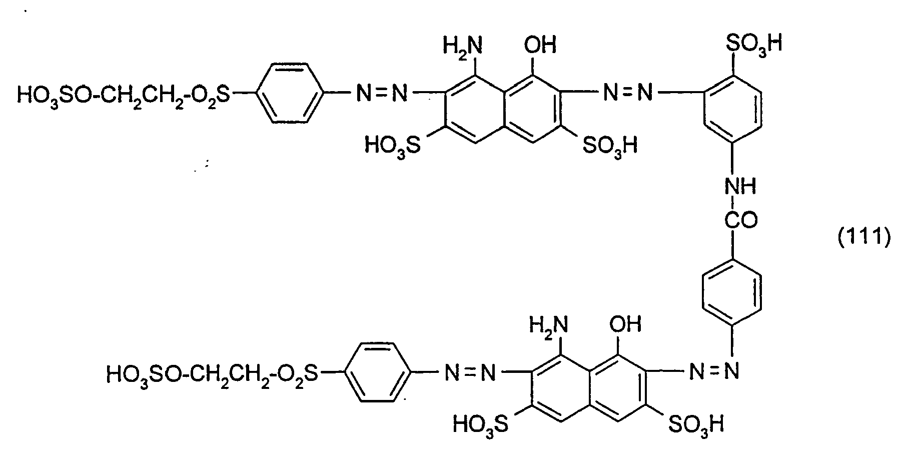 and 30 parts of sodium chloride in 1000 parts of water. The temperature of the dyebath is increased to 90°C in the course of 30 minutes and maintained for a further 45 minutes. The temperature is then reduced to 70°C in the course of about 15 minutes, 15 parts of calcined soda are added and the temperature of the dyebath is maintained at 70°C for a further 45 minutes. The dyed fabric is then rinsed and dried in customary manner. A dark navy-blue dyeing having good fastness properties is obtained.

### Example 79:

100 parts of a cotton fabric are introduced at a temperature of 30°C into a dyebath containing 2.7 parts of the dye of formula (102), 0.9 part of the dye of formula (101), 2.4 parts of the dye of formula 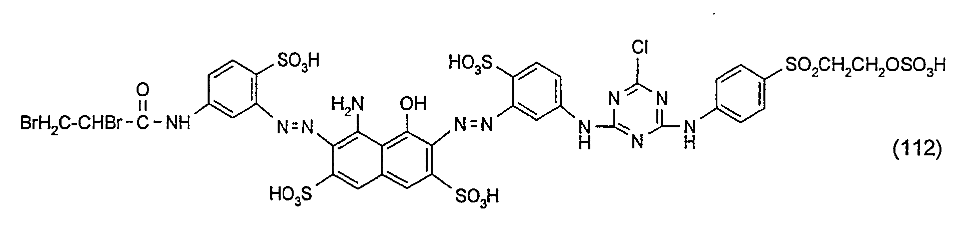 and 90 parts of sodium chloride in 1000 parts of water. The temperature of the dyebath is maintained for 20 minutes and then increased to 80°C in the course of about 40 minutes. 20 parts of calcined soda are then added and the temperature of the dyebath is maintained at 80°C for a further 45 minutes. The dyed fabric is then rinsed and dried in customary manner. A dark navy-blue dyeing having good fastness properties is obtained.

Example 80: 10 g of woollen fabric are dyed in a laboratory dyeing apparatus using the following liquor:
0.2 g of sodium acetate,
0.5 g of 80 % acetic acid,
0.2 g of a commercially available levelling agent (Albegal B® ),
0.36 g of the blue dye of formula 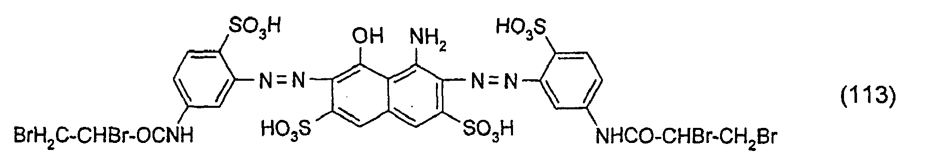
0.04 g of the orange dye of formula (101) and
200 ml of water.

The pH of the liquor is 4.5. The textile is treated in the dyeing liquor for 5 min at 40°C, then heated to boiling temperature (98°C) at a rate of 1°/min and dyed at that temperature for 90 minutes. After the liquor has cooled to 80°C, the dyeing is rinsed and finished in customary manner. A black dyeing exhibiting fibre- and surface-levelness and good fastness properties is obtained.

Examples 81 to 85: Using the procedure indicated in Example 80, but using instead of 0.36 g of the blue dye of formula (113) and 0.04 g of the orange dye of formula (101) a dye mixture indicated in column 2 of Table 3 below in the amount indicated therein, there are likewise obtained black dyeings exhibiting fibre- and surface-levelness and good fastness properties.

**Table 3**

| Ex. | Dye mixture or dye |
|---|---|
| 81 | 0.36 g of the blue dye of formula (112), |
| | 0.04 g of the orange dye of formula (101) and |
| | 0.02 g of the red dye of formula 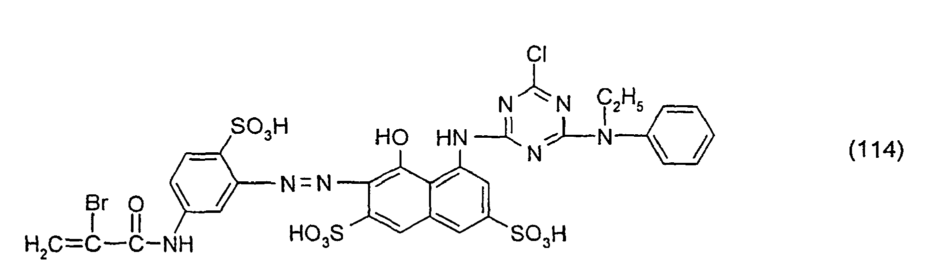 |
| 82 | 0.27 g of the blue dye of formula (102) |
| | 0.026 g of the orange dye of formula (101). |
| 83 | 0.27 g of the blue dye of formula (102), |
| | 0.026 g of the orange dye of formula (101) and |
| | 0.016 g of the red dye of formula (114). |
| 84 | 0.27 g of the blue dye of formula (102) and |
| | 0.028 g of the orange dye of formula 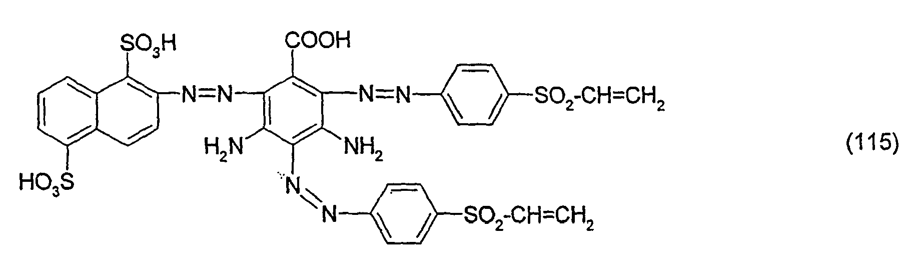 |
| 85 | 0.27 g of the blue dye of formula (102), |
| | 0.026 g of the orange dye of formula (115) and |
| | 0.017 g of the red dye of formula (114). |

Example 86: 10 g of a woollen tricot finished to superwash standard in accordance with the Hercoset method is dyed in a laboratory dyeing apparatus using the following liquor:
0.2 g of sodium acetate
0.5 g of 80 % acetic acid
0.5 g of Glauber's salt
0.2 g of a commercially available levelling agent (Albegal B® )
0.36 g of the blue dye of formula (113)
0.04 g of the orange dye of formula (101) and
200 ml of water.

The pH of the liquor is 4.7. The textile material is treated in the dyeing liquor for 5 minutes at 40°C, then heated to 60°C at a rate of 1 °/min and maintained at 60°C for 20 minutes. Heating to boiling temperature (98°C) is then carried out at a rate of 1°/min and dyeing is carried out at that temperature for 90 minutes. After cooling, the textile material is treated in a fresh liquor containing 5 g/l of sodium hydrogen carbonate for 20 minutes at 80°C and pH 8.3. Rinsing is carried out in customary manner and 1 % formic acid, based on the fibre weight, is added to the final rinsing bath for souring. A black dyeing exhibiting fibre- and surface-levelness and good fastness properties is obtained.

in analogous manner, instead of the dye mixture of 0.36 g of the blue dye of formula (113) and 0.04 g of the orange dye of formula (101), a dye mixture according to any one of Examples 80 to 84 can be used.

Example 87: 100 parts of a cotton fabric are introduced at a temperature of 30°C into a dyebath containing 0.75 part of the dye of formula (101), 3.5 parts of the dye of formula (102) and 0.75 part of the dye mixture of the dyes of formulae 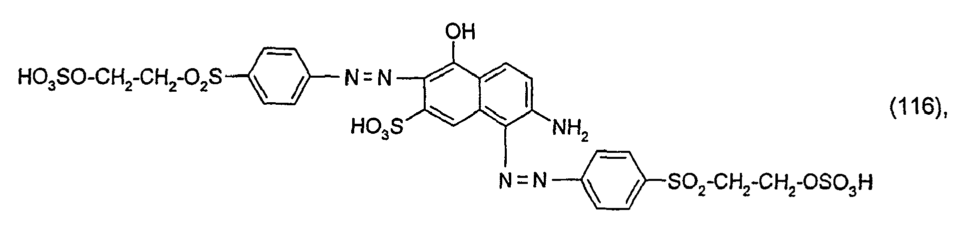 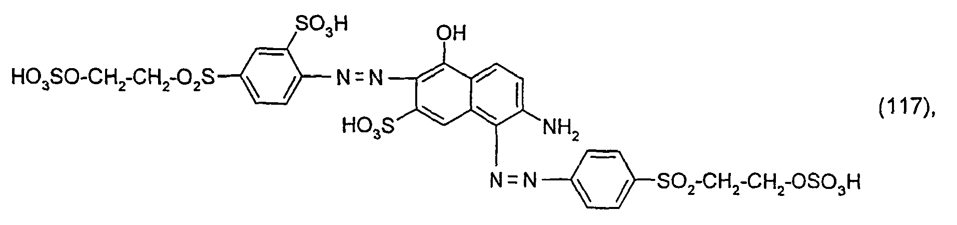 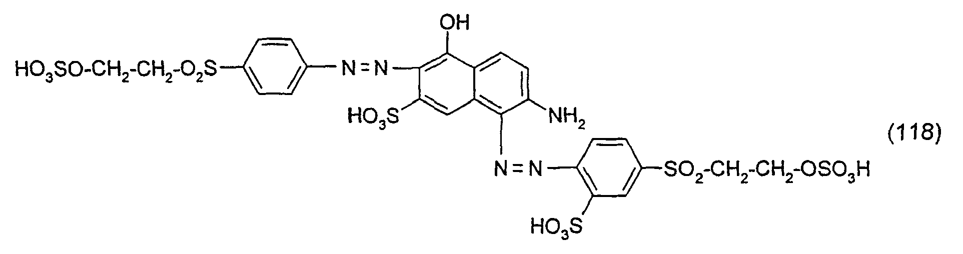 and 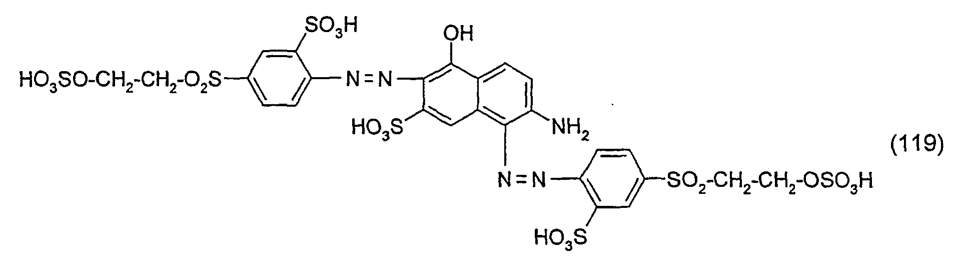 and 30 parts of sodium chloride in 1000 parts of water. The temperature of the dyebath is increased to 90°C in the course of 30 minutes and is maintained for a further 45 minutes. The temperature is then reduced to 70°C in the course of about 15 minutes; 15 parts of calcined soda are added and the temperature of the dyebath is maintained at 70°C for a further 45 minutes. The dyed fabric is then rinsed and dried in customary manner. A black-dyed cotton fabric having good all-round fastness properties is obtained.

Example 88: Using the procedure indicated in Example 87, but using instead of 0.75 part of the dye mixture of the dyes of formulae (116), (117), (118) and (119) 0.75 part of the dye of formula 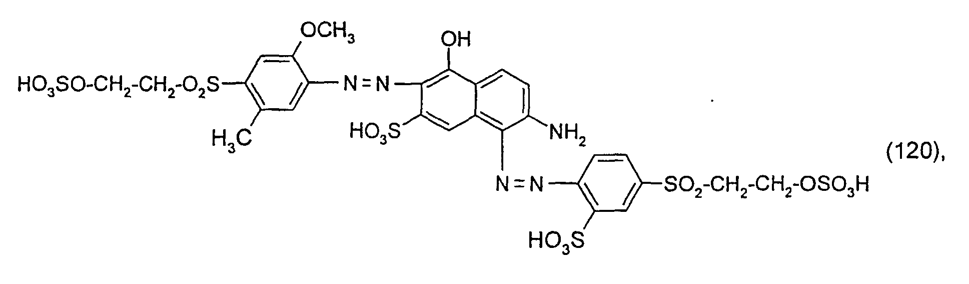 there is likewise obtained a black-dyed cotton fabric having good all-round fastness properties.

## Claims

1. A dye mixture comprising a reactive dye having at least one structural unit of formula 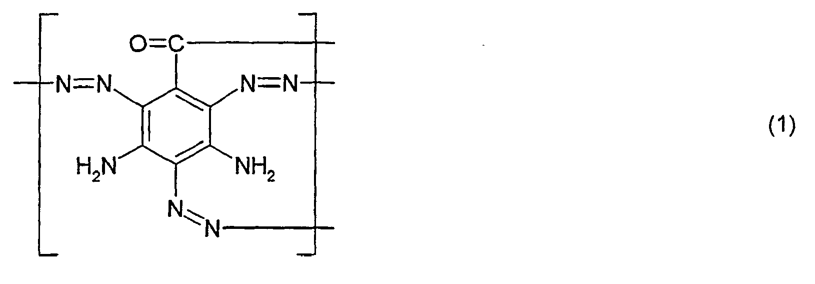 together with a reactive dye of formula 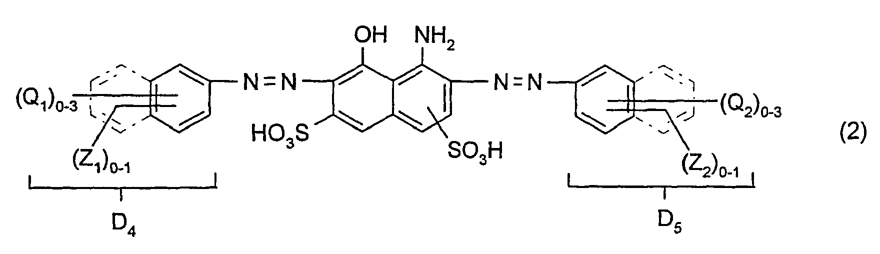 wherein
(Q₁)₀₋₃ and (Q₂)₀₋₃ each independently of the other denote from 0 to 3 identical or different substituents selected from the group halogen, C₁-C₄alkyl, C₁-C₄alkoxy, carboxy and sulfo, Z₁ and Z₂ are each independently of the other a fibre-reactive radical,
at least one fibre-reactive radical being contained in the dye of formula (1) and
the dye of formula (2) containing at least one fibre-reactive radical Z₁ or Z₂.

2. A dye mixture according to claim 1, wherein
the reactive dye having at least one structural unit of formula (1) corresponds to a dye of formula 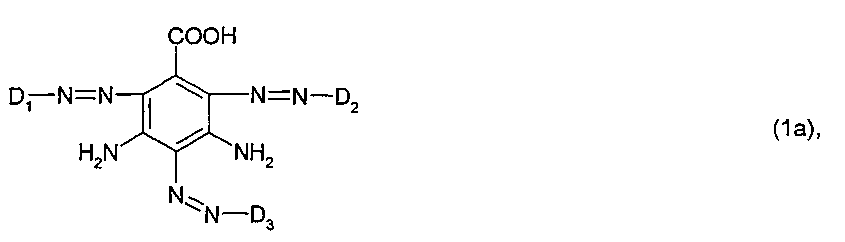 wherein
D₁, D₂ and D₃ are each independently of the others the radical of a diazo component of the benzene or naphthalene series, wherein at least one of the radicals D₁, D₂ and D₃ contains a fibre-reactive radical.

3. A dye mixture according to claim 1 or claim 2, wherein
D₁, D₂ and D₃ each independently of the others correspond to a radical of formula (5) or (6) 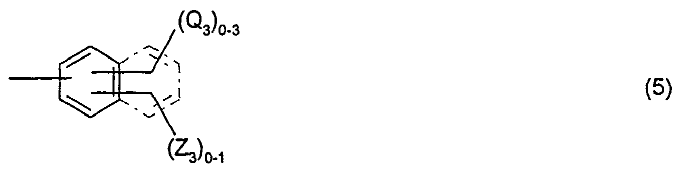 or 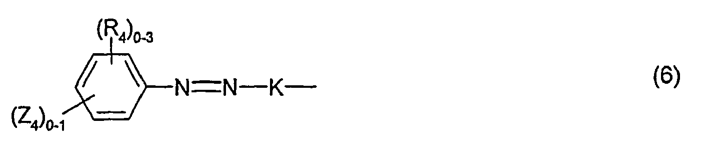 wherein
K is the radical of a coupling component of formula (7a) or (7b) 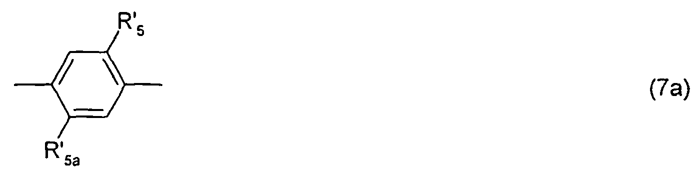 or 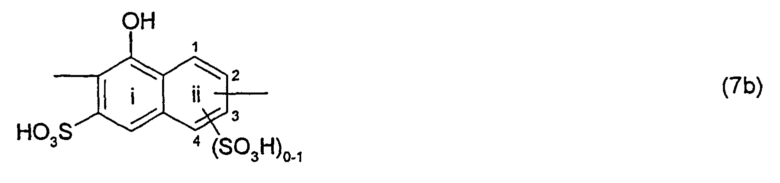 and
Z₃ and Z₄ are each independently of the other a radical of formula (3a), (3b), (3c), (3d), (3e) or (3f)
-SO₂-Y (3a),
-NH-CO-(CH₂)ₗ-SO₂-Y (3b),
-CONR₂-(CH₂)ₘ-SO₂-Y (3c),
-NH-CO-CH(Hal)-CH₂-Hal (3d),
-NH-CO-C(Hal)=CH₂ (3e), 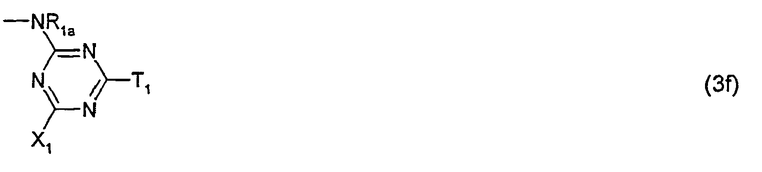
wherein
R₁ₐ and R₂ are hydrogen,
Hal is bromine,
Y is vinyl, β-chloroethyl or β-sulfatoethyl,
T₁ is C₁-C₄alkoxy, C₁-C₄alkylthio, hydroxy, amino, N-mono- or N,N-di-C₁-C₄alkylamino unsubstituted or substituted in the alkyl moiety or moieties by hydroxy, sulfato or by sulfo, morpholino, or phenylamino or N-C₁-C₄alkyl-N-phenylamino (wherein the alkyl is unsubstituted or substituted by hydroxy, sulfo or by sulfato) each unsubstituted or substituted in the phenyl ring by sulfo, carboxy, acetylamino, chlorine, methyl or by methoxy, or naphthylamino unsubstituted or substituted by from 1 to 3 sulfo groups, or is a fibre-reactive radical of formula (4b'), (4c') or (4d')
-NH-(CH₂)₂₋₃-O-(CH₂)₂₋₃-SO₂Y (4b'), 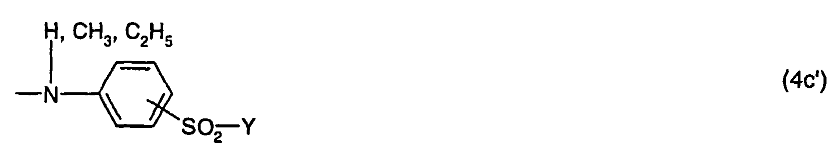
or 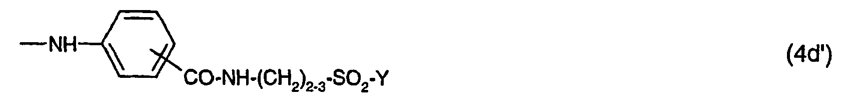 and Y is as defined above,
X₁ is chlorine or fluorine,
m and I are each independently of the other the number 2 or 3,
(R₄)₀₋₃ and (Q₃)₀₋₃ each independently of the other denote from 0 to 3 identical or different substituents selected from the group halogen, C₁-C₄alkyl, C₁-C₄alkoxy, carboxy and sulfo, R'₅ is hydrogen, sulfo or C₁-C₄alkoxy unsubstituted or substituted in the alkyl moiety by hydroxy or by sulfato, and
R'₅ₐ is hydrogen, C₁-C₄alkyl, C₁-C₄alkoxy, C₂-C₄alkanoylamino, ureido or a radical of formula (3f) wherein the radicals R₁ₐ, T₁ and X₁ are as defined above.

4. A dye mixture according to any one of claims 1 to 3, wherein the radicals D₁, D₂ and D₃ each independently of the others correspond to a radical of formula (5a), (5b), (5c), (5d), (5e) or (6a) 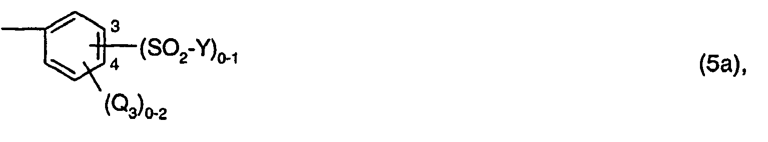 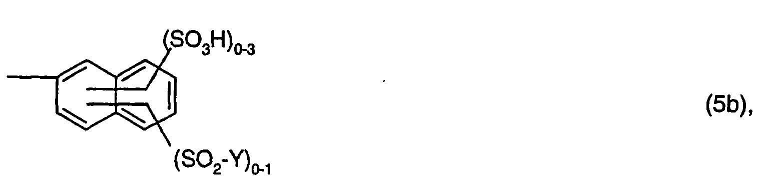 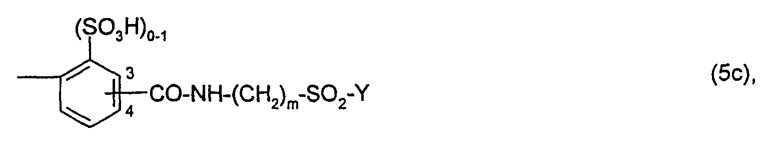 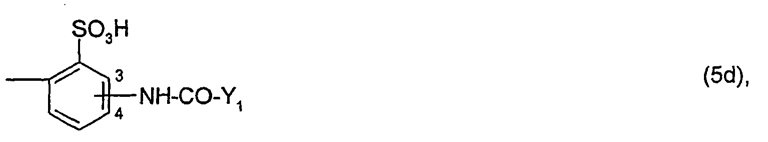 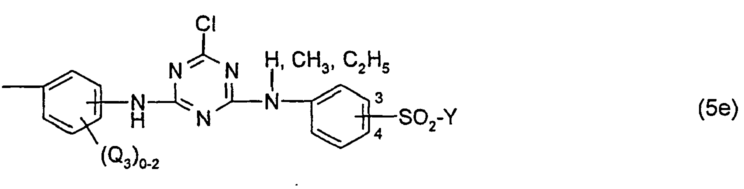 or 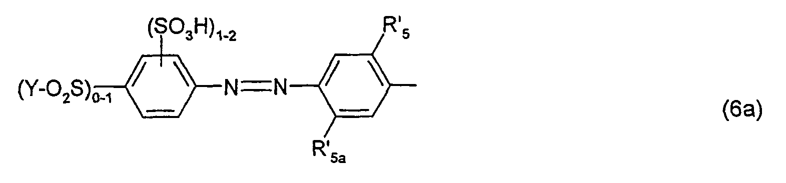 wherein
R'₅ is hydrogen, sulfo or ethoxy unsubstituted or substituted in the alkyl moiety by hydroxy or by sulfato,
R'₅ₐ is hydrogen, methyl, ethyl, methoxy, ethoxy, acetylamino, propionylamino or ureido,
(Q₃)₀₋₂ denotes from 0 to 2 identical or different substituents selected from the group C₁-C₄alkyl, C₁-C₄alkoxy and sulfo,
Y₁ is a group -CH(Br)-CH₂-Br or -C(Br)=CH₂,
Y is vinyl, β-chloroethyl or β-sulfatoethyl, and
m is the number 2 or 3.

5. A dye mixture according to any one of claims 1 to 4, wherein
the reactive dye of formula (2) is a dye of formula 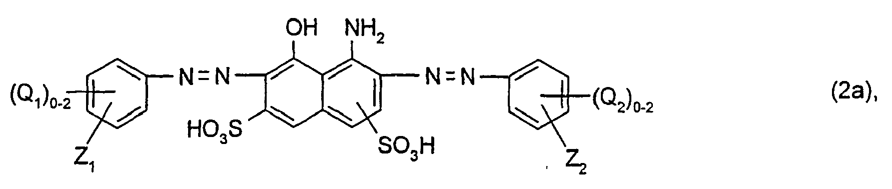 wherein
(Q₁)₀₋₂ and (Q₂)₀₋₂ each independently of the other denote from 0 to 2 identical or different substituents selected from the group C₁-C₄alkyl, C₁-C₄alkoxy and sulfo, and
Z₁ and Z₂ are as defined in claim 1.

6. A dye mixture according to claim 5, wherein
Z₁ and Z₂ are each independently of the other a radical of formula (3a), (3b), (3c), (3d), (3e) or (3f)
-SO₂-Y (3a),
-NH-CO-(CH₂)ₗ-SO₂-Y (3b),
-CONR₂-(CH₂)ₘ-SO₂-Y (3c),
-NH-CO-CH(Hal)-CH₂-Hal (3d),
-NH-CO-C(Hal)=CH₂ (3e)
or 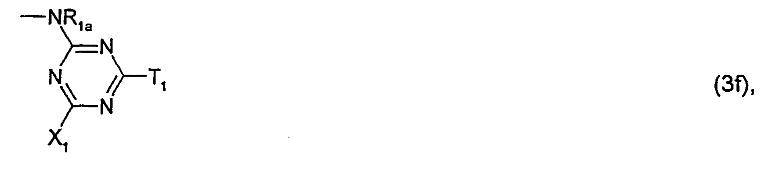 wherein
Y is vinyl, β-chloroethyl or β-sulfatoethyl,
Hal is bromine,
R₂ and R₁ₐ are hydrogen,
I and m are each independently of the other the number 2 or 3,
X₁ is fluorine or chlorine,
T₁ is C₁-C₄alkoxy, C₁-C₄alkylthio, hydroxy, amino, N-mono- or N,N-di-C₁-C₄alkylamino unsubstituted or substituted in the alkyl moiety or moieties by hydroxy, sulfato or by sulfo, morpholino, or phenylamino or N-C₁-C₄alkyl-N-phenylamino (wherein the alkyl is unsubstituted or substituted by hydroxy, sulfo or by sulfato) each unsubstituted or substituted in the phenyl ring by sulfo, carboxy, acetylamino, chlorine, methyl or by methoxy, or naphthylamino unsubstituted or substituted by from 1 to 3 sulfo groups, or T₁ is a fibre-reactive radical of formula (4a'), (4b'), (4c'), (4d') or (4f')
-NH-(CH₂)₂₋₃-SO₂Y (4a'),
-NH-(CH₂)₂₋₃-O-(CH₂)₂₋₃-SO₂Y (4b'), 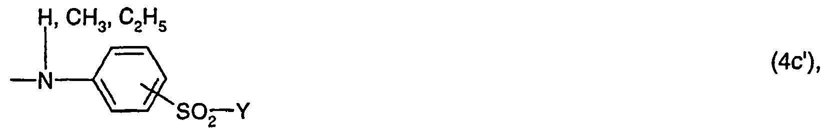 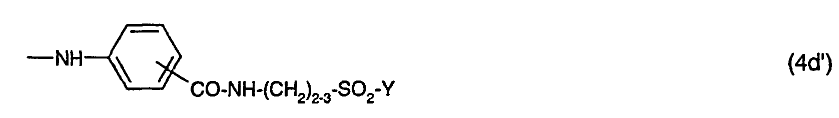
or 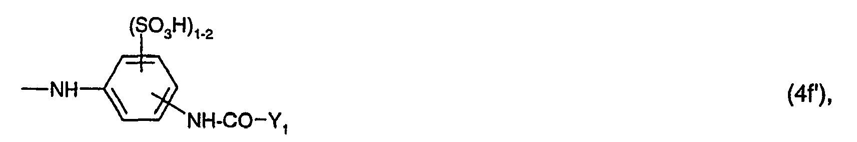 wherein
Y is as defined above, and
Y₁ is a group -CH(Br)-CH₂-Br or -C(Br)=CH₂.

7. A dye mixture according to any one of claims 1 to 6, comprising a dye of formula 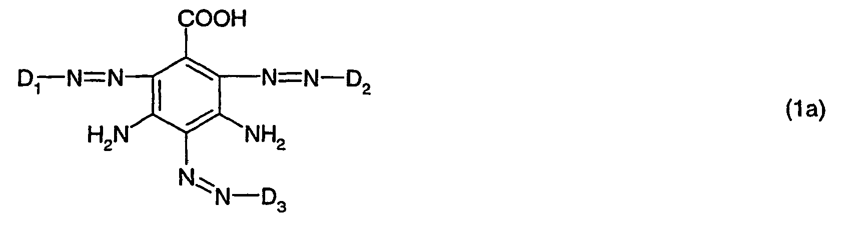 together with a dye of formula 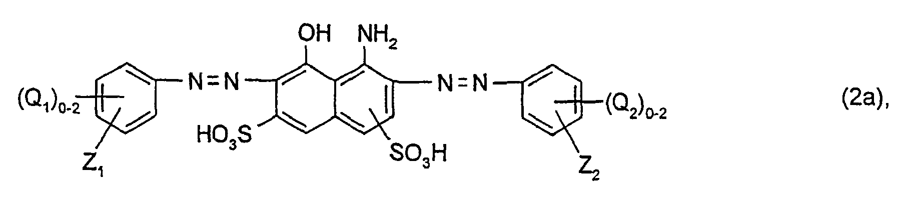 wherein
D₁, D₂ and D₃ are each independently of the others a radical of formula (5a), (5b) or (6a) 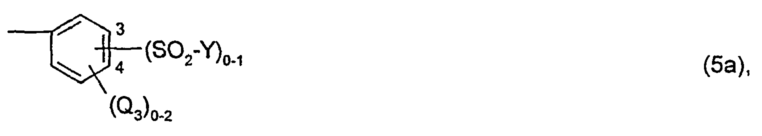 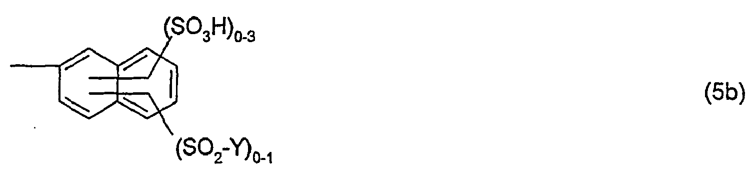 or 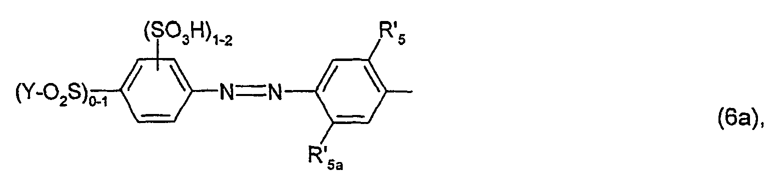 wherein
R'₅ is hydrogen, sulfo or ethoxy unsubstituted or substituted in the alkyl moiety by hydroxy or by sulfato,
R'₅ₐ is hydrogen, methyl, ethyl, methoxy, ethoxy, acetylamino, propionylamino or ureido,
(Q₁)₀₋₂ (Q₂)₀₋₂ and (Q₃)₀₋₂ each independently of the other denote from 0 to 2 identical or different substituents selected from the group C₁-C₄alkyl, C₁-C₄alkoxy and sulfo,
Y is vinyl or β-sulfatoethyl, and
Z₁ and Z₂ are each independently of the other a radical of formula (3a), (3b), (3c), (3d), (3e) or (3f)
-SO₂-Y (3a),
-NH-CO-(CH₂),-SO₂-Y (3b),
-CONR₂-(CH₂)ₘ-SO₂-Y (3c),
-NH-CO-CH(Hal)-CH₂-Hal (3d),
-NH-CO-C(Hal)=CH₂ (3e)
or 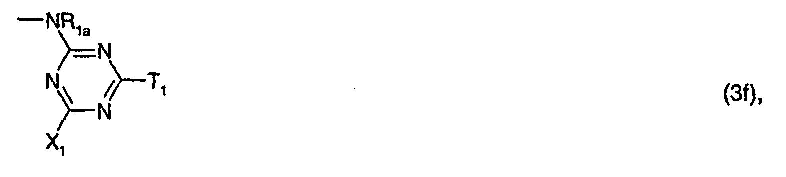 wherein
Y is vinyl, β-chloroethyl or β-sulfatoethyl,
Hal is bromine,
R₁ₐ and R₂ are hydrogen,
l and m are each independently of the other the number 2 or 3,
X₁ is fluorine or chlorine, and
T₁ is a fibre-reactive radical of formula (4b'), (4c') or (4d')
-NH-(CH₂)₂₋₃-O-(CH₂)₂₋₃-SO₂Y (4b'), 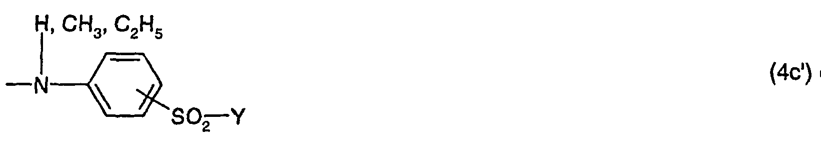
or 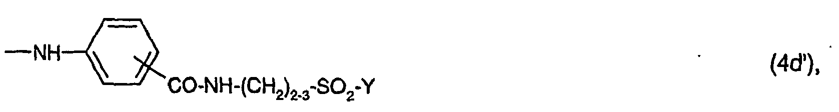 wherein
Y is as defined above.

8. A dye mixture according to any one of claims 1 to 7, which additionally comprises a dye of formula 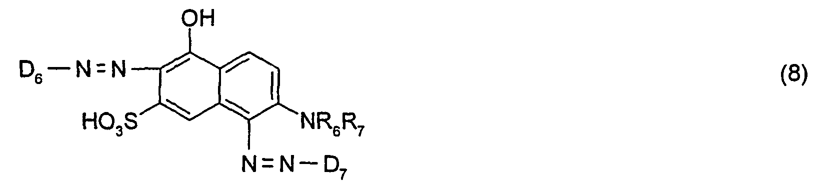 wherein
R₆ and R₇ are each independently of the other hydrogen or C₁-C₄alkyl, and
D₆ and D₇ are each independently of the other the radical of a diazo component of the benzene or naphthalene series.

9. Use of a dye mixture according to any one of claims 1 to 8 in the dyeing or printing of hydroxyl-group-containing or nitrogen-containing fibre materials.

10. Use according to claim 9, wherein cellulosic fibre materials, especially cotton-containing fibre materials, are dyed or printed.

11. An aqueous ink comprising a dye mixture according to claim 1.

12. Use of an aqueous ink according to claim 11 in an inkjet printing method for the printing of hydroxyl-group-containing or nitrogen-containing fibre materials.

## Patentansprüche

1. Farbstoffmischungen, **dadurch gekennzeichnet, dass** sie einen Reaktivfarbstoff mit mindestens einer Struktureinheit der Formel 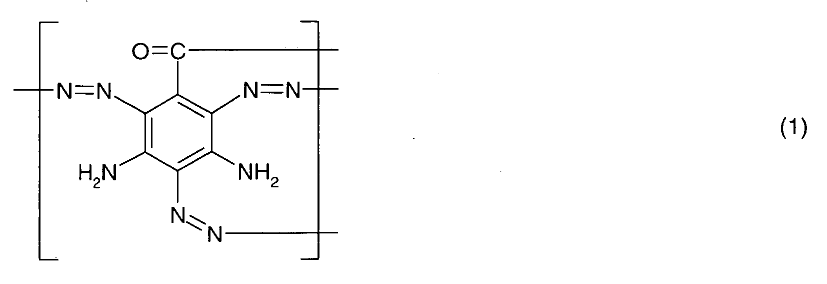 zusammen mit einem Reaktivfarbstoff der Formel 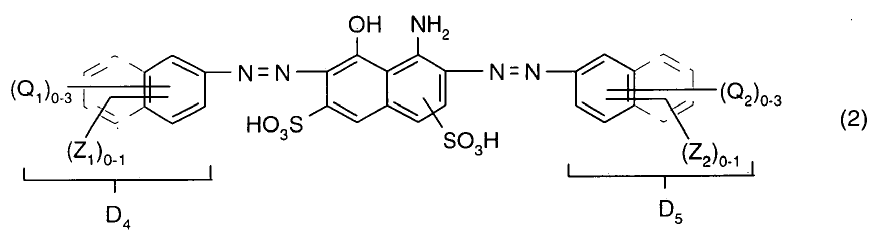 enthalten, worin
(Q₁)₀₋₃ und (Q₂)₀₋₃ unabhängig voneinander für 0 bis 3 gleiche oder voneinander verschiedene Substituenten ausgewählt aus der Gruppe Halogen, C₁-C₄-Alkyl, C₁-C₄-Alkoxy, Carboxy und Sulfo stehen,
Z₁ und Z₂ unabhängig voneinander jeweils einen faserreaktiven Rest bedeuten, wobei im Farbstoff der Formel (1) mindestens ein faserreaktiver Rest enthalten ist und
der Farbstoff der Formel (2) mindestens einen faserreaktiver Rest Z₁ oder Z₂ enthält.

2. Farbstoffmischungen gemäss Anspruch 1, **dadurch gekennzeichnet, dass**
der Reaktivfarbstoff mit mindestens einer Struktureinheit der Formel (1) einem Farbstoff der Formel 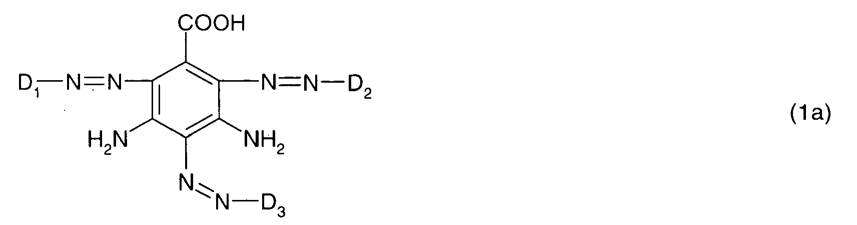 entspricht, worin
D₁, D₂ und D₃ unabhängig voneinander je den Rest einer Diazokomponente der Benzol- oder Naphthalinreihe bedeuten, wobei mindestens einer der Reste D₁, D₂ und D₃ einen faserreaktiven Rest enthält.

3. Farbstoffmischungen gemäss Anspruch 1 oder 2, **dadurch gekennzeichnet, dass** D₁, D₂ und D₃ unabhängig voneinander je einem Rest der Formel (5) oder (6) 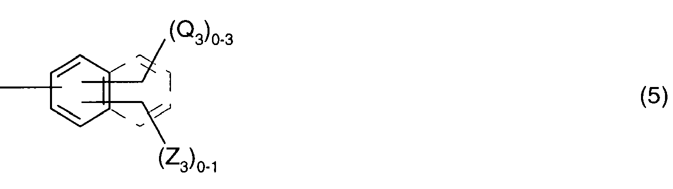 oder 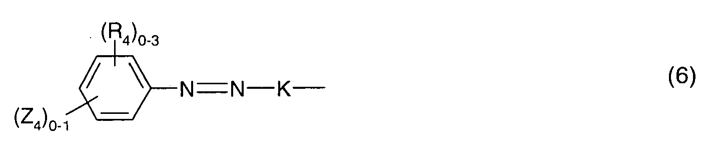 entsprechen, worin
K für den Rest einer Kupplungskomponente der Formel (7a) oder (7b) 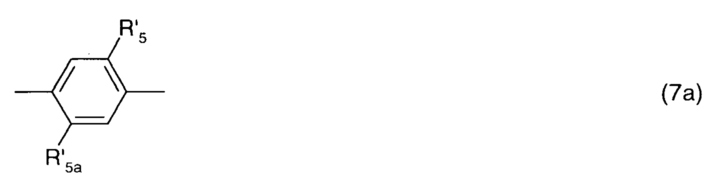 oder 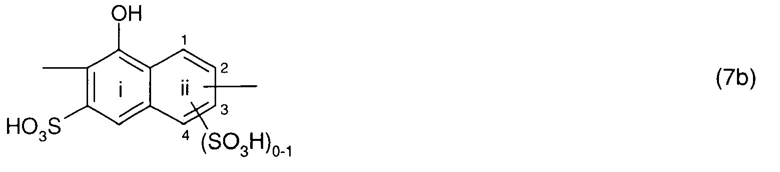 und
Z₃ und Z₄ unabhängig voneinander für einen Rest der Formel (3a), (3b), (3c), (3d), (3e) oder (3f)
-SO₂-Y (3a),
-NH-CO-(CH₂)ₗ-SO₂-Y (3b),
-CONR₂-(CH₂)ₘ-SO₂-Y (3c),
-NH-CO-CH(Hal)-CH₂-Hal (3d),
-NH-CO-C(Hal)=CH₂ (3e), 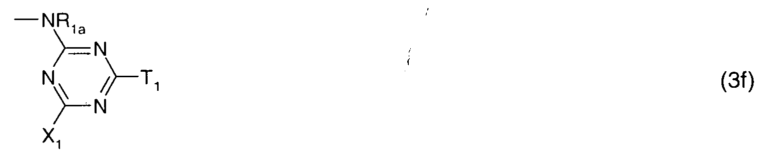
stehen, worin
R₁ₐ und R₂ Wasserstoff sind,
Hal Brom bedeutet,
Y Vinyl, β-Chlorethyl oder β-Sulfatoethyl ist,
T₁ für C₁-C₄-Alkoxy, C₁-C₄-Alkylthio, Hydroxy, Amino, gegebenenfalls im Alkylteil durch Hydroxy, Sulfato oder Sulfo substituiertes N-Mono- oder N,N,Di-C₁-C₄-Alkylamino, Morpholino, gegebenenfalls im Phenylring durch Sulfo, Carboxy, Acetylamino, Chlor, Methyl oder Methoxy substituiertes Phenylamino oder N-C₁-C₄-Alkyl-N-phenylamino, worin das Alkyl gegebenenfalls durch Hydroxy, Sulfo oder Sulfato substituiert ist, gegebenenfalls durch 1 bis 3 Sulfogruppen substituiertes Naphthylamino, oder für einen faserreaktiven Rest der Formel (4b'), (4c') oder (4d')
-NH-(CH₂)₂₋₃-O-(CH₂)₂₋₃-SO₂Y (4b'), 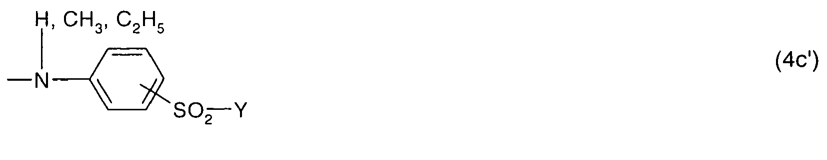
oder 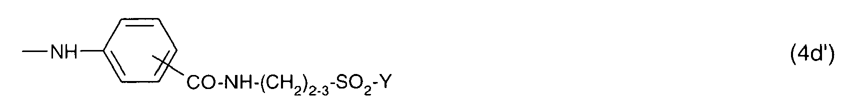 steht und Y die oben angegebene Bedeutung hat,
X₁ Chlor oder Fluor ist,
m und I unabhängig voneinander die Zahl 2 oder 3 bedeuten,
(R₄)₀₋₃ und (Q₃)₀₋₃ unabhängig voneinander für 0 bis 3 gleiche oder voneinander verschiedene Substituenten ausgewählt aus der Gruppe Halogen, C₁-C₄-Alkyl, C₁-C₄-Alkoxy, Carboxy und Sulfo stehen,
R'₅ Wasserstoff, Sulfo oder gegebenenfalls im Alkylteil durch Hydroxy oder Sulfato substituiertes C₁-C₄-Alkoxy ist,
R'₅ₐ für Wasserstoff, C₁-C₄-Alkyl, C₁-C₄-Alkoxy, C₂-C₄-Alkanoylamino, Ureido oder einen Rest der Formel (3f) steht, worin für die Reste R₁ₐ, T₁ und X₁ die oben angegebenen Bedeutungen gelten.

4. Farbstoffmischungen gemäss einem der Ansprüche 1 bis 3, **dadurch gekennzeichnet, dass** die Reste D₁, D₂ und D₃ unabhängig voneinander je einem Rest der Formel (5a), (5b), (5c), (5d), (5e) oder (6a) 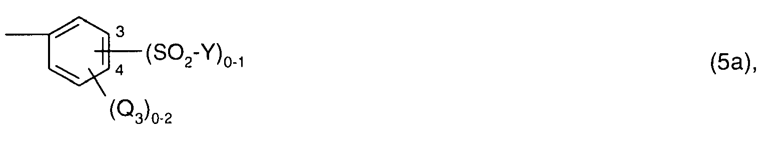 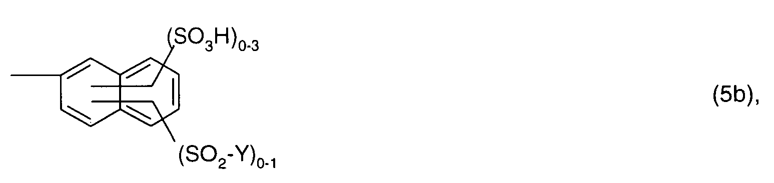 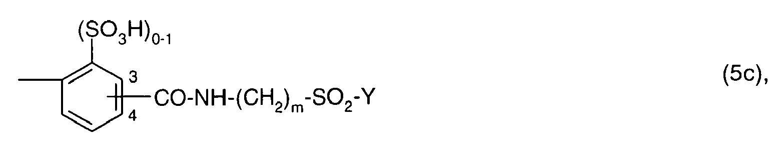 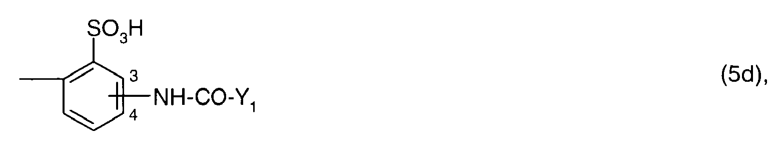 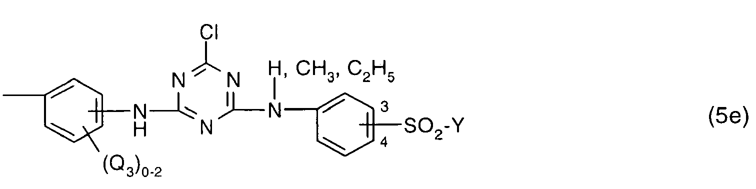 oder 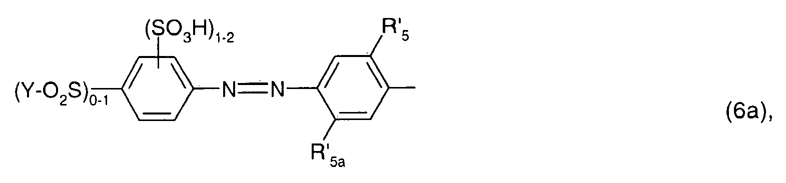 entsprechen, worin
R'₅ für Wasserstoff, Sulfo oder gegebenenfalls im Alkylteil durch Hydroxy oder Sulfato substituiertes Ethoxy steht,
R'₅ₐ Wasserstoff, Methyl, Ethyl, Methoxy, Ethoxy, Acetylamino, Propionylamino oder Ureido ist,
(Q₃)₀₋₂ für 0 bis 2 gleiche oder voneinander verschiedene Substituenten ausgewählt aus der Gruppe C₁-C₄-Alkyl, C₁-C₄-Alkoxy und Sulfo steht,
Y₁ für eine Gruppe -CH(Br)-CH₂-Br oder -C(Br)=CH₂ steht,
Y Vinyl, β-Chlorethyl oder β-Sulfatoethyl ist und
m die Zahl 2 oder 3 bedeutet.

5. Farbstoffmischungen gemäss einem der Ansprüche 1 bis 4, **dadurch gekennzeichnet, dass** der Reaktivfarbstoff der Formel (2) ein Farbstoff der Formel 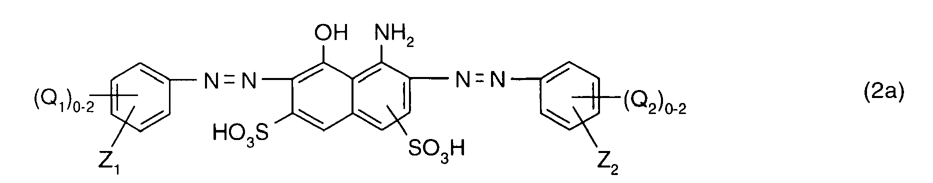 ist, worin
(Q₁)₀₋₂ und (Q₂)₀₋₂ unabhängig voneinander für 0 bis 2 gleiche oder voneinander verschiedene Substituenten ausgewählt aus der Gruppe C₁-C₄-Alkyl, C₁-C₄-Alkoxy und Sulfo stehen, und
Z₁ und Z₂ die Bedeutungen gemäss Anspruch 1 haben.

6. Farbstoffmischungen gemäss Anspruch 5, **dadurch gekennzeichnet, dass** Z₁ und Z₂ unabhängig voneinander einen Rest der Formel (3a), (3b), (3c), (3d), (3e) oder (3f)
-SO₂-Y (3a),
-NH-CO-(CH₂)ₗ-SO₂₋Y (3b),
-CONR₂-(CH₂)ₘ-SO₂-Y (3c),
-NH-CO-CH(Hal)-CH₂-Hal (3d),
-NH-CO-C(Hal)=CH₂ (3e)
oder 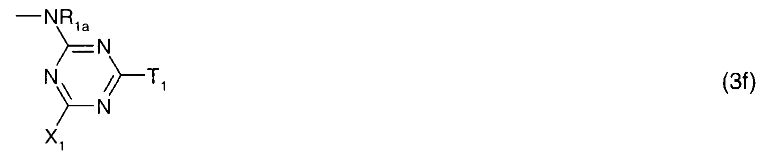 bedeuten, worin
Y Vinyl, β-Chlorethyl oder β-Sulfatoethyl,
Hal Brom,
R₂ und R₁ₐ Wasserstoff,
l und m unabhängig voneinander die Zahl 2 oder 3,
X₁ Fluor oder Chlor,
T₁ C₁-C₄-Alkoxy, C₁-C₄-Alkylthio, Hydroxy, Amino, gegebenenfalls im Alkylteil durch Hydroxy, Sulfato oder Sulfo substituiertes N-Mono- oder N,N-Di-C₁-C₄-Alkylamino, Morpholino, gegebenenfalls im Phenylring durch Sulfo, Carboxy, Acetylamino, Chlor, Methyl oder Methoxy substituiertes Phenylamino oder N-C₁-C₄-Alkyl-N-phenylamino, worin das Alkyl gegebenenfalls durch Hydroxy, Sulfo oder Sulfato substituiert ist, oder gegebenenfalls durch 1 bis 3 Sulfogruppen substituiertes Naphthylamino sind, oder T₁ für einen faserreaktiven Rest der Formel (4a'), (4b'), (4c'), (4d') oder (4f')
-NH-(CH₂)₂₋₃-SO₂Y (4a'),
-NH-(CH₂)₂₋₃-O-(CH₂)₂₋₃-SO₂Y (4b'), 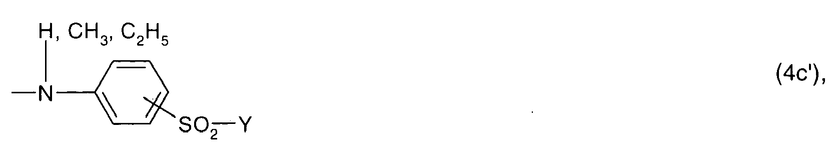 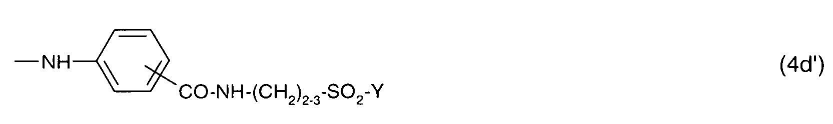
oder 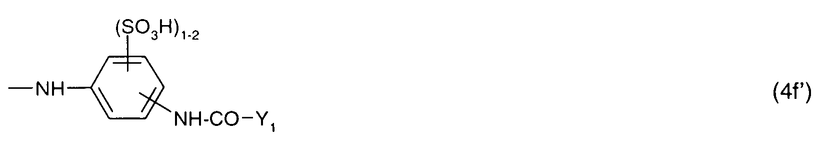 steht, worin
Y die oben angegebene Bedeutung hat, und
Y₁ für eine Gruppe -CH(Br)-CH₂-Br oder -C(Br)=CH₂ steht.

7. Farbstoffmischungen gemäss einem der Ansprüche 1 bis 6, **dadurch gekennzeichnet, dass** sie einen Farbstoff der Formel 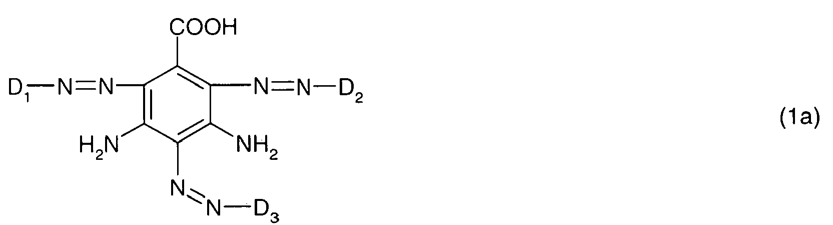 zusammen mit einem Farbstoff der Formel 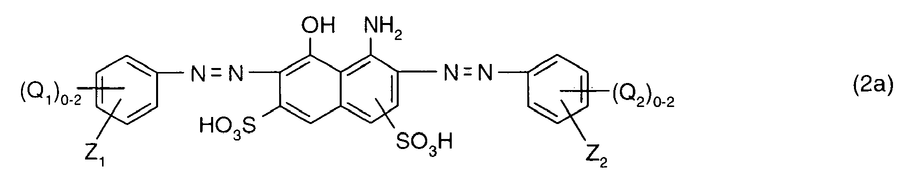 enthalten, worin
D₁, D₂ und D₃ unabhängig voneinander je einen Rest der Formel (5a), (5b) oder (6a) 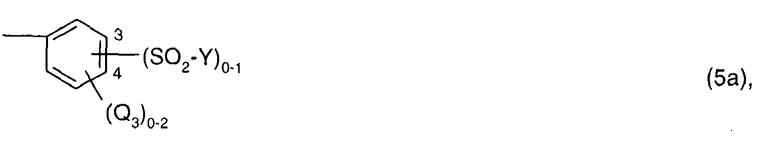 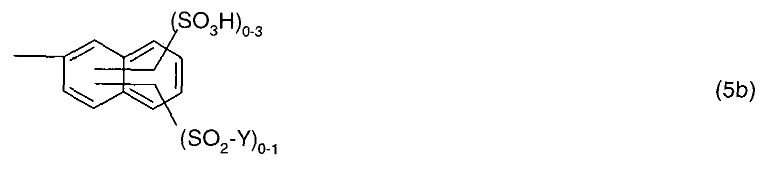 oder 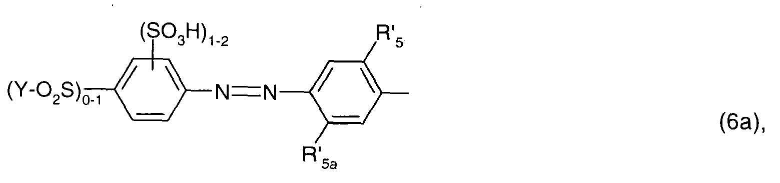 bedeuten, worin
R'₅ für Wasserstoff, Sulfo oder gegebenenfalls im Alkylteil durch Hydroxy oder Sulfato substituiertes Ethoxy steht,
R'₅ₐ Wasserstoff, Methyl, Ethyl, Methoxy, Ethoxy, Acetylamino, Propionylamino oder Ureido ist,
(Q₁)₀₋₂, (Q₂)₀₋₂ und (Q₃)₀₋₂ unabhängig voneinander für 0 bis 2 gleiche oder voneinander verschiedene Substituenten ausgewählt aus der Gruppe C₁-C₄-Alkyl, C₁-C₄-Alkoxy und Sulfo stehen,
Y Vinyl oder β-Sulfatoethyl bedeutet, und
Z₁ und Z₂ unabhängig voneinander einen Rest der Formel (3a), (3b), (3c), (3d), (3e) oder (3f)
-SO₂-Y (3a),
-NH-CO-(CH₂)ₗSO₂-Y (3b),
-CONR₂-(CH₂)ₘ-SO₂-Y (3c),
-NH-CO-CH(Hal)-CH₂-Hal (3d),
-NH-CO-C(Hal)=CH₂ (3e)
oder 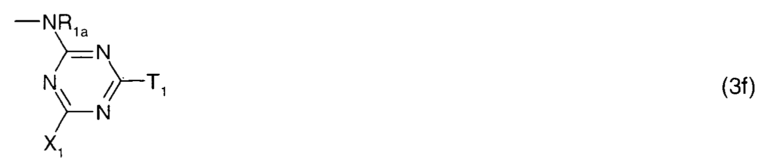 bedeuten, worin
Y Vinyl, β-Chlorethyl oder β-Sulfatoethyl,
Hal Brom,
R₁ₐ und R₂ Wasserstoff,
l und m unabhängig voneinander die Zahl 2 oder 3,
X₁ Fluor oder Chlor,
T₁ für einen faserreaktiven Rest der Formel (4b'), (4c') oder (4d')
-NH-(CH₂)₂₋₃-O-(CH₂)₂₋₃-SO₂Y (4b'), 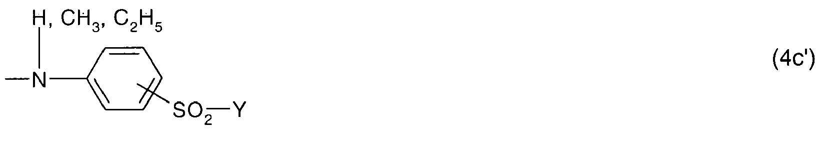
oder 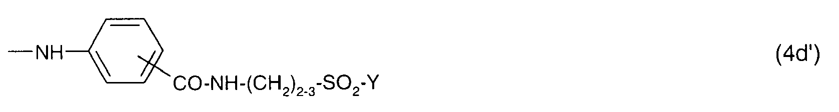 stehen, worin
Y die oben angegebene Bedeutung hat.

8. Farbstoffmischungen gemäss einem der Ansprüche 1 bis 7, **dadurch gekennzeichnet, dass** sie zusätzlich einen Farbstoff der Formel 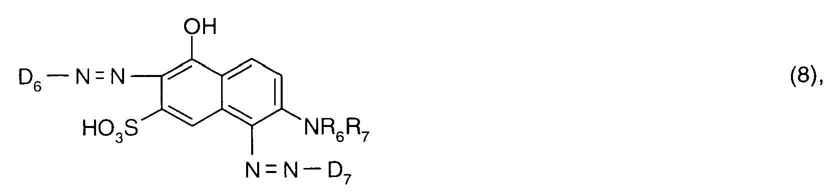 enthalten, worin
R₆ und R₇ unabhängig voneinander je Wasserstoff oder C₁-C₄-Alkyl bedeuten, und
D₆ und D₇ unabhängig voneinander je den Rest einer Diazokomponente der Benzol- oder Naphthalinreihe bedeuten.

9. Verwendung von Farbstoffmischungen gemäss einem der Ansprüche 1 bis 8 zum Färben oder Bedrucken von hydroxylgruppenhaltigen oder stickstoffhaltigen Fasermaterialien.

10. Verwendung gemäss Anspruch 9, **dadurch gekennzeichnet, dass** man cellulosehaltige Fasermaterialien, insbesondere baumwollhaltige Fasermaterialien, färbt oder bedruckt.

11. Wässrige Tinten, **dadurch gekennzeichnet, dass** sie
eine Farbstoffmischung gemäss Anspruch 1 enthalten.

12. Verwendung der wässrigen Tinten gemäss Anspruch 11 in einem Tintenstrahldruck-Verfahren zum Bedrucken von hydroxylgruppenhaltigen oder stickstoffhaltigen Fasermaterialien.

## Revendications

1. Mélange de colorants comprenant un colorant réactif présentant au moins une unité de structure de formule 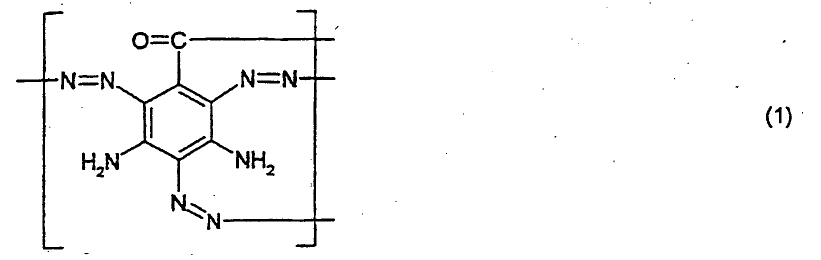 conjointement avec un colorant réactif de formule 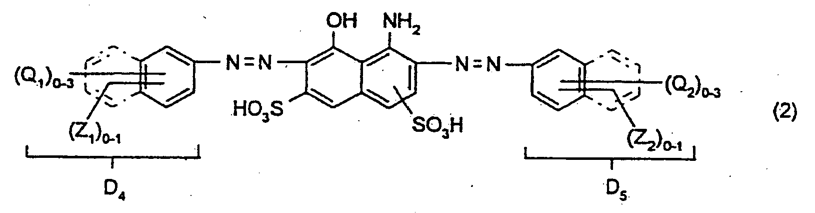 où
(Q₁)₀₋₃ et (Q₂) ₀₋₃. indépendamment l'un de l'autre, chacun représente 0 à 3 substituants identiques ou différents pris dans le groupe comprenant un atome d'halogène, un groupe alkyle en C₁-C₄, alkoxy en C₁-C₄, carboxy et sulfo,
Z₁ et Z₂, indépendamment l'un de l'autre, chacun représente un radical réactif sur la fibre, au moins un radical réactif sur la fibre étant contenu dans le colorant de formule (1) et le colorant de formule (2) contenant au moins un radical réactif sur la fibre Z₁ ou Z₂.

2. Mélange de colorants selon la revendication 1, où
le colorant réactif présentant au moins une unité de structure de formule (1) correspond à un colorant de formule 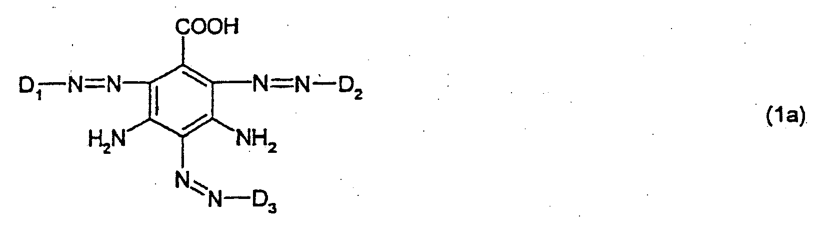 dans laquelle
D₁, D₂ et D₃, indépendamment les uns des autres, chacun représente le radical d'un composant diazo de la famille du benzène ou du naphtalène, où au moins un des radicaux D₁, D₂ et D₃ contient un radical réactif sur la fibre.

3. Mélange de colorants selon la revendication 1 ou la revendication 2, où
D₁, D₂ et D₃, indépendamment les uns des autres, chacun représente un radical de formule (5) ou (6) 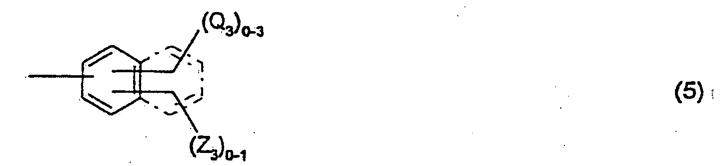 ou 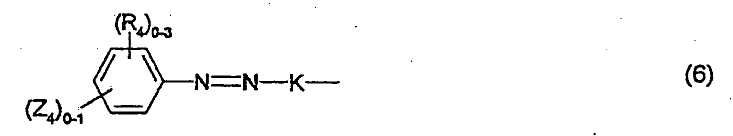 où
K est le radical d'un composant de copulation de formule (7a) ou (7b) 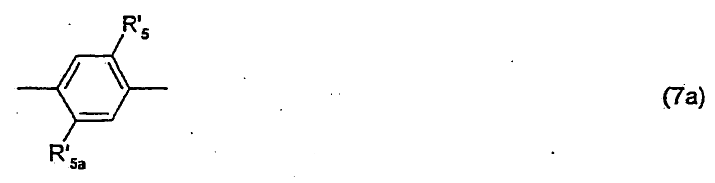 ou 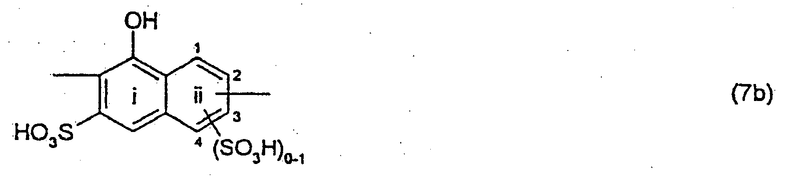 et
Z₃ et Z₄, chacun indépendamment l'un de l'autre, représente un radical de formule (3a), (3b), (3c) , (3d), (3e) ou (3f) ci-dessus
-SO₂-Y (3a),
-NH-CO-(CH₂)ₗ-SO₂-Y (3b),
-CONR₂-(CH₂)ₘ-SO₂-Y (3c),
-NH-CO-CH(Hal)-CH₂-Hal (3d),
-NH-CO-C(Hal)=CH₂ (3e), 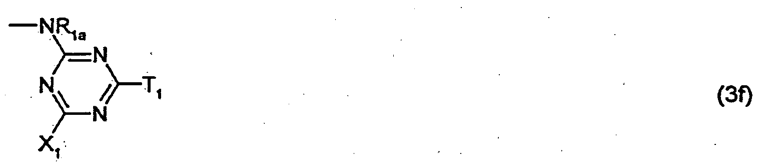
où
R₁ₐ et R₂ représentent un atome d'hydrogène,
Hal représente un atome de brome,
Y représente un groupe vinyle, β-chloroéthyle ou β-sulfatoéthyle,
T₁ représente un groupe alkoxy en C₁-C₄, (alkyl en C₁-C₄)thio, hydroxy, amino, N-mono- ou N,N-di-(alkyl en C₁-C₄)amino non substitué ou substitué sur le fragment ou les fragments alkyle par un substituant hydroxy, sulfato ou sulfo, morpholino, ou phénylamino ou N- (alkyl en C₁-C₄) -N-phénylamino (où le groupe alkyle est non substitué ou substitué par un substituant hydroxy, sulfo ou sulfato) chacun non substitué ou substitué sur le cycle phényle par un substituant sulfo, carboxy, acétylamino, chlore, méthyle ou méthoxy, ou naphtylamino non substitué ou substitué par 1 à 3 groupes sulfo, ou est un radical réactif sur la fibre de formule (4b'), (4c') ou (4d')
-NH-(CH₂)₂₋₃-O-(CH₂)₂₋₃-SO₂Y (4b'), 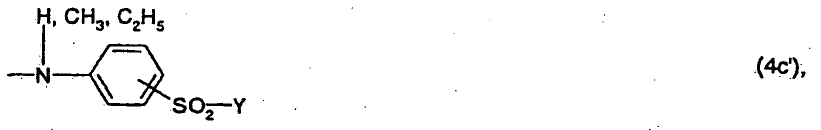
ou 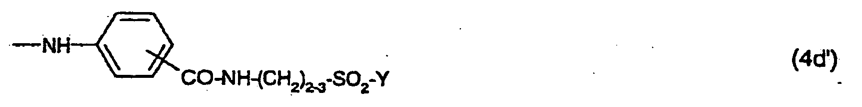 et
Y est défini ci-dessus,
X₁ représente un atome de chlore ou de fluor,
m et 1, indépendamment l'un de l'autre, chacun vaut 2 ou 3,
(R₄) ₀₋₃ et (Q₃)₀₋₃, indépendamment l'un de l'autre, chacun représente de 0 à 3 substituants identiques ou différents pris dans le groupe comprenant un atome d'halogène, alkyle en C₁-C₄, alkoxy en C₁-C₄, carboxy et sulfo,
R'₅ représente un atome d' hydrogène, un groupe sulfo ou alkoxy en C₁-C₄ non substitué ou substitué sur le fragment alkyle par un substituant hydroxy ou sulfato, et
R'₅ₐ représente un atome d'hydrogène, un groupe alkyle en C₁-C₄, alkoxy en C₁-C₄, (alcanoyl en C₂-C₄) - amino, uréido ou un radical de formule (3f) où les radicaux R₁ₐ, T₁ et X₁ sont définis ci-dessus.

4. Mélange de colorants selon l'une quelconque des revendications 1 à 3, où les radicaux D₁, D₂ et D₃, indépendamment les uns des autres, chacun représente un radical de formule (5a), (5b), (5c), (5d), (5e) ou (6a) 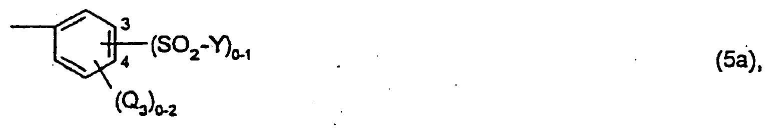 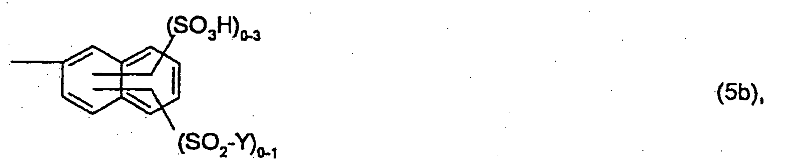 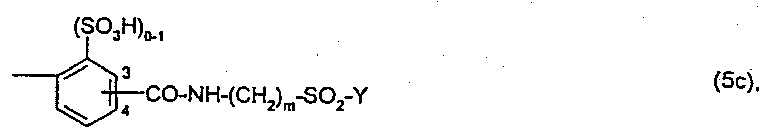 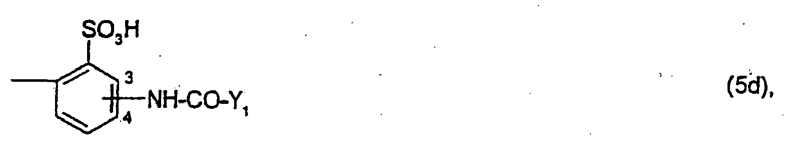 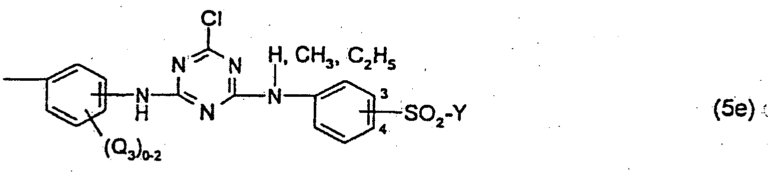 ou 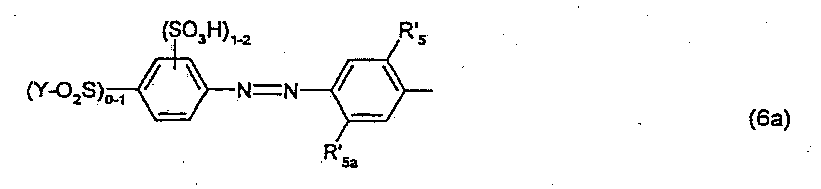 où
R'₅ représente un atome d'hydrogène, un groupe sulfo ou éthoxy non substitué ou substitué sur le fragment alkyle par un substituant hydroxy ou sulfato,
R'₅ₐ représente un atome d'hydrogène, un groupe méthyle, éthyle, méthoxy, éthoxy, acétylamino, propionylamino ou uréido,
(Q₃)₀₋₂ représente 0 à 2 substituants identiques ou différents pris dans le groupe comprenant alkyle en C₁-C₄, alkoxy en C₁-C₄ et sulfo,
Y₁ représente un groupe -CH(Br)-CH₂-Br ou -C(Br)=CH₂,
Y représente un groupe vinyle, β-chloroéthyle ou β-sulfatoéthyle, et
m vaut 2 ou 3.

5. Mélange de colorants selon l'une quelconque des revendications 1 à 4, où
le colorant réactif de formule (2) est un colorant de formule 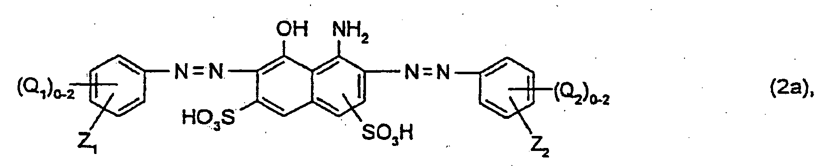 où
(Q₁)₀₋₂ et (Q₂)₀₋₂, indépendamment l'un de l'autre, chacun représente 0 à 2 substituant identiques ou différents pris dans le groupe comprenant alkyle en C₁-C₄, alkoxy en C₁-C₄ et sulfo, et
Z₁ et Z₂ sont définis à la revendication 1.

6. Mélange de colorants selon la revendication 5, où
Z₁ et Z₂, indépendamment l'un de l'autre, chacun représente un radical de formule (3a), (3b), (3c), (3d), (3e) ou (3f)
-SO₂-Y (3a),
-NH-CO-(CH₂)ₗ-SO₂-Y (3b),
-CONR₂-(CH₂)ₘ-SO₂-Y (3c),
-NH-CO-CH(Hal)-CH₂-Hal (3d),
-NH-CO-C(Hal)=CH₂ (3e),
ou 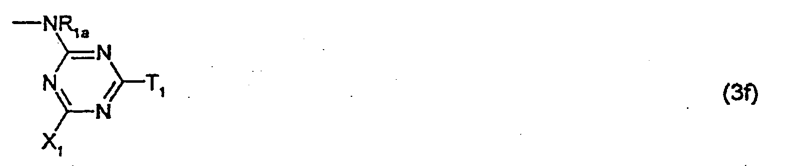 où
Y représente un groupe vinyle, β-chloroéthyle ou β-sulfatoéthyle,
Hal représente un atome de brome,
R₂ et R₁ₐ représentent un atome d'hydrogène,
l et m, indépendamment l'un de l'autre, chacun vaut 2 ou 3,
X₁ représente un atome de fluor ou de chlore,
T₁ représente un groupe alkoxy en C₁-C₄, (alkyl en C₁-C₄)-thio, hydroxy, amino, N-mono- ou N,N-di-(alkyl en C₁-C₄)amino non substitué ou substitué sur le fragment ou les fragments alkyle par un substituant hydroxy, sulfato ou sulfo, morpholino, ou phénylamino ou N- (alkyl en C₁-C₄)-N-phénylamino (où le groupe alkyle est non substitué ou substitué par un substituant hydroxy, sulfo ou sulfato) chacun non substitué ou substitué sur le cycle phényle par sulfo, carboxy, acétylamino, , chlore, méthyle ou méthoxy, ou naphtylamino non substitué ou substitué par 1 à 3 groupes sulfo, ou T₁ est un radical réactif sur la fibre de formule (4a'), (4b'), (4c'), (4d') ou (4f')
-NH-(CH₂)₂₋₃-SO₂Y (4a'),
-NH-(CH₂)₂₋₃-O-(CH₂)₂₋₃-SO₂Y (4b'), 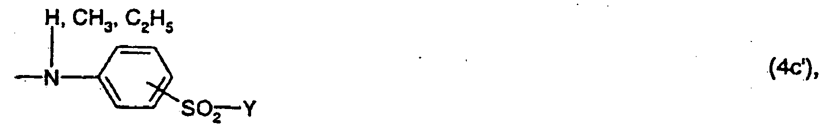 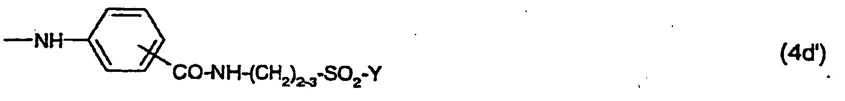
ou 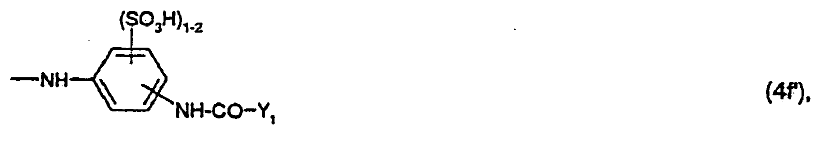 où
Y est défini ci-dessus, et
Y₁ représente un groupe -CHBr-CH₂Br ou -CBr=CH₂.

7. Mélange de colorants selon l'une des revendications 1 à 6, comprenant un colorant de formule 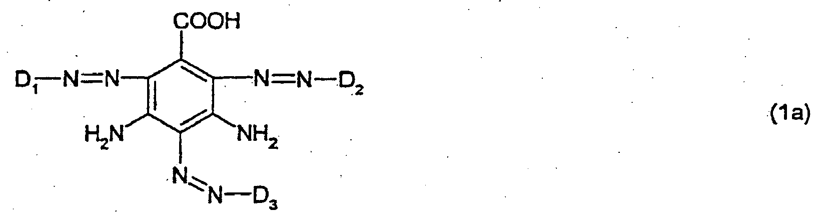 conjointement avec un colorant de formule 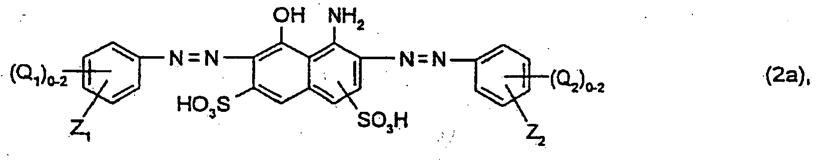 où
D₁, D₂ et D₃, indépendamment les uns des autres, chacun correspond à un radical de formule (5a), (5b) ou (6a) 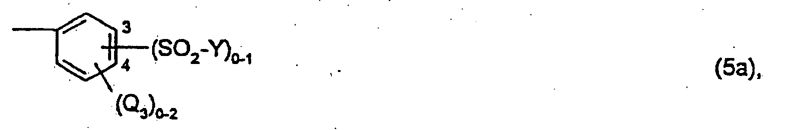 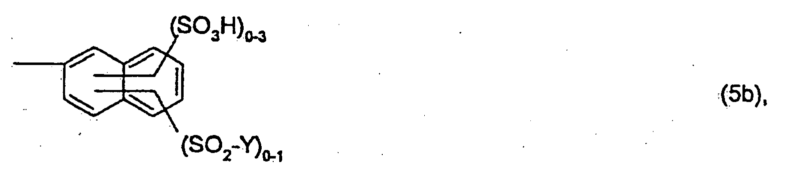 ou 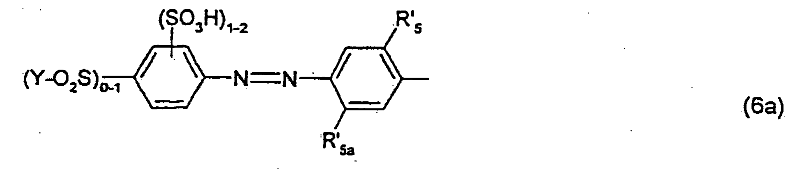 où
R'₅ représente un atome d'hydrogène, un groupe sulfo ou éthoxy non substitué ou substitué sur le fragment alkyle par un substituant hydroxy ou sulfato,
R'₅ₐ représente un atome d'hydrogène, un groupe méthyle, éthyle, méthoxy, éthoxy, acétylamino, propionylamino ou uréido,
(Q₁)₀₋₂, (Q₂)₀₋₂ et (Q₃)₀₋₂, indépendamment les uns des autres, chacun représente 0 à 2 substituants identiques ou différents pris dans le groupe comprenant alkyle en C₁-C₄, alkoxy en C₁-C₄ et sulfo,
Y représente un groupe vinyle ou β-sulfatoéthyle, et
Z₁ et Z₂, indépendamment l'un de l'autre, chacun représente un radical de formule (3a), (3b), (3c), (3d), (3e) ou (3f)
-SO₂-Y (3a),
-NH-CO-(CH₂)ₗSO₂-Y (3b),
-CONR₂-(CH₂)ₘ-SO₂-Y (3c),
-N,H-CO-CH(HaI)-CH₂-Hal (3d),
-NH-CO-C(Hal)=CH₂ (3e),
ou 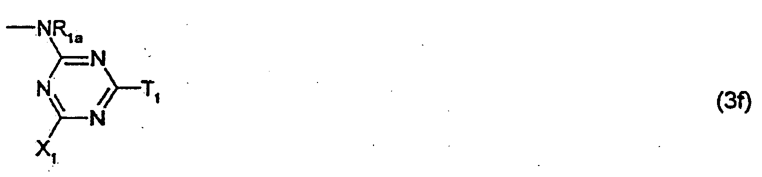 où
Y représente un groupe vinyle, β-chloroéthyle ou β-sulfatoéthyle,
Hal représente un atome de brome,
R₁ₐ et R₂ représentent un atome d'hydrogène,
l et m, indépendamment l'un de l'autre, chacun vaut 2 ou 3,
X₁ représente un atome de fluor ou de chlore ;
T₁ est un radical réactif sur la fibre de formules (4b'), (4c') et (4d'),
-NH-(CH₂)₂₋₃-(CH₂)₂₋₃SO₂Y (4b'), 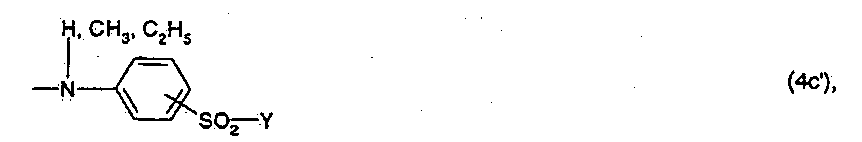
ou 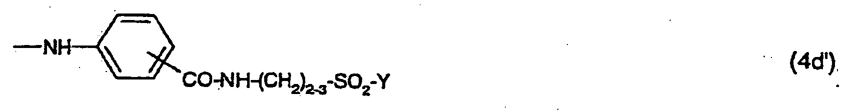 où
Y est défini comme ci-dessus.

8. Mélange de colorants selon l'une quelconque des revendications 1 à 7, qui comprend de plus un colorant de formule 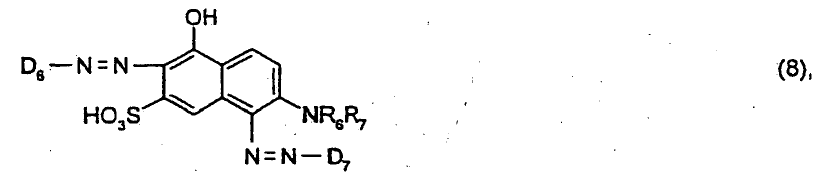 où
R₆ et R₇, indépendamment l' un de l'autre, chacun représente un atome d'hydrogène ou un groupe alkyle en C₁-C₄, et
D₆ et D₇, indépendamment l'un de l'autre, chacun représente le radical d'un composant diazo de la famille du benzène ou du naphtalène.

9. Utilisation d'un mélange de colorants selon l'une quelconque des revendications 1 à 8 dans la teinture ou l'impression de matières fibreuses contenant des groupes hydroxyle ou azotées.

10. Utilisation selon la revendication 9, où l'on teint ou imprime des matières fibreuses cellulosiques, en particulier des matières fibreuses contenant du coton.

11. Encre aqueuse comprenant un mélange de colorants selon la revendications 1.

12. Utilisation d'une encre aqueuse selon la revendication 11 dans un procédé d'impression à jet d'encre pour l'impression de matières fibreuses contenant des groupes hydroxyle ou azotées.
